# EUROPEAN PATENT SPECIFICATION

(11) **EP 1 786 697 B1**
(45) Date of publication and mention of the grant of the patent: **05.11.2014**
(21) Application number: 05777771.6
(22) Date of filing: 31.08.2005
(51) Int. Cl.: B65D 47/20, B29C 45/44, B29C 33/44, A47G 19/22

(54) **Dispensing device comprising an underpressure-activated valve for a drinking receptacle**
Spendervorrichtung mit einem Unterdruckventil für einen Getränkebehälter
Dispositif de distribution comprenant une soupape à dépression pour un récipient à boisson

(30) Priority: 09.09.2004 NO 20043775
(43) Date of publication of application: 23.05.2007
(73) Proprietor: Smartseal AS, 4033 Stavanger (NO)
(72) Inventor: NÆSJE, Kjetil, N-4314 SANDNES (NO)
(74) Representative: Håmsø Patentbyrå ANS
(86) International application number: PCT/NO2005/000314
(87) International publication number: WO 2006/028378

(56) References cited:
- WO-A1-01/97663
- WO-A1-95/10965
- WO-A1-03/078265
- WO-A2-2004/067389
- NO-B1- 316 506
- NO-B1- 316 506
- NO-L- 20 025 193
- NO-L- 20 025 197
- US-A- 4 209 485
- US-A- 5 560 513
- US-A1- 2002 189 684
- US-A1- 2002 189 684
- US-B1- 6 290 090

## Description

### Area of the invention

The present invention concerns a hygiene-maintaining device of an underpressure-activated valve for a drinking receptacle. The valve is used to control a pressurized or non-pressurized liquid outflow from the receptacle. The liquid may be a liquid nutrient, for example a refreshing drink or a milk-containing product, and the liquid may be pressurized from carbon dioxide or some other suitable gas. Preferably, the present hygiene-maintaining device is intended for use in connection with a drinking spout or similar drinking device for the drinking receptacle, or in connection with a cap for the drinking receptacle. For example, the drinking receptacle may be a bottle, soft drink bottle, feeding bottle, carton, pouch, can, tube, paper drinking cup or a plastic cup.

### Background of the invention

The invention is based on the use of an underpressure-activated valve of a type that includes a suction chamber for opening the valve to liquid outflow from the drinking receptacle. Various examples of such underpressure-activated valves with a suction chamber are known from patent publications mentioned hereinafter. The underpressure-activated valve opens when said suction chamber is exposed to an underpressure P2 relative to the ambient pressure P1 of the drinking receptacle. Normally, the ambient pressure will be atmospheric air pressure. Preferably, the underpressure P2 is formed in response to a consumer of the liquid sucking air out of the suction chamber via a downstream drinking opening connected to the chamber. Moreover, the liquid is present in the receptacle at a pressure P3, which represents an overpressure relative to the ambient pressure P1. The composition and mode of operation of the valve will be described in further detail hereinafter.

Common to said known examples of such an underpressure-activated valve is that liquid must exit via at least a portion of said suction chamber. Consequently, liquid residues may remain in the suction chamber after cessation of the liquid outflow. Depending on the type of liquid contained in the drinking receptacle, this may result in bacterial growth in the liquid residues and potential bad odour emanating therefrom. As such, there is a risk of bacteria being mixed into subsequent liquid outflows so as to create unhygienic conditions therein, which is undesirable.

### Prior art and disadvantages thereof

The following patent publications show examples of underpressure-activated valves of the present type:
- US 6,290,090 (Essebaggers), corresponding to WO 01/92133;
- Norwegian patent NO 316506 (Naesje); and
- Norwegian patent application 2002 5193 (Naesje).

Generally, most valves consist of an activation element and a seal member. The activation element is connected to the seal member and can move the activation element between an open and a closed position. The activation element may comprise an operating member (or manoeuvring member) and a bracing element connected to the operating member. The operating member is arranged so as to provide an activation force, which is transmitted via the bracing element to the seal member in order to move the seal member and open the valve. For example, the bracing element may be a strut, a valve stem or a tube. The seal member may be a valve head that is attached to the bracing element, and which closes, whilst in position of rest, a liquid outlet opening within or connected to the drinking receptacle.

The underpressure-activated valves according to the above-mentioned patent publications make use of a pressure sensitive operating member activated by means of an underpressure P2 in said suction chamber. A flexible membrane, possibly parts of a membrane, a bellows or some other flexible body of similar type may be used as an operating member. The operating member is pressure-balanced against the ambient pressure P1 of the drinking receptacle, and the operating member is arranged so as to open to air outflow when the pressure P2 in said downstream drinking opening is less than the ambient pressure P1 by a predetermined value. Thereby, a resulting differential pressure (P1-P2) moves the operating member with said valve-opening activation force, which is transmitted to the seal member of the valve.

As mentioned, a substantial disadvantage of the valves according to said patent publications is that remaining liquid residues in the suction chamber may be mixed into subsequent liquid outflows so as to create unhygienic conditions therein.

US2002/189684A1 discloses a vacuum demand valve for delivering a flowable material is disclosed. The valve has a housing having a proximal end, a distal end, an intermediate segment therebetween defining a passageway wherein the flowable substance can flow from the proximal end to the distal end. The housing can be a tubing. A valve member is located along the intermediate segment. The valve member has a closed condition wherein the flow of the flowable material from the proximal end to the distal end is stopped and an open condition wherein the flow of the flowable material from the proximal end to the distal end is unstopped. The valve member is biased in the closed condition and is responsive to a partial vacuum provided by the user through the passageway for placing the valve member in the open condition.

WO95/10965A1 discloses a child's drinking cup having a releasable lid providing a mouthpiece. Sucking on the latter causes air to be drawn from the valve members through a channel, whereby to open the valves and allow liquid from the container to be sucked into a space and therefrom through the open mouths out of the mouthpiece. On release of the sucking action, the valve members automatically close, thereby providing a reliable seal to the cup when not in use.

US5,560,513A discloses a spill-proof drink container being provided with an interior fluid tank having a resilient, diaphragm-like bottom closure and an interior recovery tube co-operating with the bottom closure in sealing relation, with an outer container housing the interior fluid tank and providing a completely surrounding negative pressure passageway, and with a dual-passageway withdrawal tube that cooperates with the negative pressure passageway and with the recovery tube. Negative pressures introduced into the withdrawal tube by the container user cause the diaphragm bottom closure to move downward whereby hydrostatic forces in the contained liquid flow the contained liquid into and through the recovery tube and through the dual-passageway withdrawal tube to the container user creating the negative pressures.

### Object of the invention

The object of the invention is to remedy the above-mentioned disadvantage of said known and underpressure-activated valves.

### How to achieve the object

The object is achieved by means of features disclosed in the patent claims 1, 12 and 21.

In principle, the object is achieved by arranging the valve so as to fully or partially prevent liquid residues from entering into the suction chamber of the valve. In practice, this is achieved by placing the suction chamber separate from a liquid outlet path through the valve. Simultaneously, the suction chamber must be connected to at least one activation opening through which said underpressure P2 may be established to activate the operating member of the valve.

The operating member is movable and comprises at least one flexible zone being resilient upon movement thereof. As such, the operating member may include, at least partially, a flexible body, for example a membrane of suitable construction and material(s). NO 316506 shows several examples of suitable membrane constructions. Besides, Norwegian patent application 2002 5193 shows a membrane construction in the form of a conically shaped membrane sleeve arranged so as to transmit maximum opening force to the valve's seal member upon underpressure-activated movement of the membrane. In the following, such membrane constructions will be shown in greater detail and in association with the present hygiene-maintaining valve device.

At least one bracing element connects the operating member to the seal member of the valve. The bracing element is of a design allowing throughput or bypassing of a liquid outflow from the drinking receptacle. As such, the bracing element may consist of a liquid throughput tube, or of a bypassable valve stem.

At least whilst in position of use, the underpressure-activated valve is connected to and pressure-sealingly encloses an outlet opening in a suitably shaped wall portion associated with the drinking receptacle. The valve is provided at the downstream side of the outlet opening. Said wall portion may be a portion of the drinking receptacle, or it may be a wall portion, preferably an end wall, of a cap for the drinking receptacle. The wall portion functions like a partition between the inner space of the drinking receptacle and the outer surroundings thereof. Hereinafter, the wall portion will be referred to simply as a partition, and the outlet opening of the partition will be referred to as a partition opening. When the valve is open, liquid exits through the partition opening, through the valve and onwards out through a downstream drinking opening connected to the valve. Preferably, the valve is provided within a drinking spout or similar drinking device. The underpressure-activated valve may also be arranged for releasable connection to the drinking receptacle or to a cap for the receptacle.

The seal member of the valve is provided at the upstream side of the partition opening. Whilst in position of rest, the seal member bears pressure-sealingly against a valve seat or similar provided at the upstream side of the partition. When an overpressure P3 is present in the drinking receptacle, the seal member will be forced harder against the partition and thus seal the partition opening better off (so-called positive pressure-sealing). Upon underpressure-activation of the operating member, the bracing element is moved in an upstream direction and pushes the seal member away from its valve seat, thereby opening the valve to liquid outflow. This valve construction is appreciably different from the valve according to US 6,290,090, the seal member of which is provided at the downstream side of the outlet opening of the drinking receptacle. Thus, the valve according to US 6,290,090 will open automatically at a certain overpressure P3 in the receptacle. Therefore, and contrary to the present discharge valve, the valve according to US 6,290,090 should only be used for non-pressurized liquids in the receptacle.

In order to separate the present valve's suction chamber from the valve's liquid outlet path, either the operating member or the partition may be provided with a separating barrier enclosing both the partition opening, at the downstream side thereof, and the bracing element. This barrier constitutes the hygiene-maintaining device of the valve and represents the distinctive characteristic of the invention. For example, the barrier may consist of a tubular body, e.g. a sleeve, connected to the operating member or the partition, cf. subsequent examples of embodiments.

Inasmuch as the valve's operating member and bracing element are arranged movable relative to the partition opening, thereby enabling opening and closing of the valve, said barrier should be associated with a liquid-flow-restraining device arranged so as to fully or partially prevent liquid flow between the suction chamber and the liquid's outlet path during said relative movement. For this reason, the barrier should be connected to at least one liquid-sealing device that seals between the barrier and the relatively-moving valve element against which the barrier seals. The liquid-sealing device may consist of an intermediate sliding seal, for example in the form of a seal surface, a seal lip, an elastic bellows or an elastic connecting material movably connecting the barrier with the relatively-moving element. Alternatively, a constricted passage, which restrains liquid flow therethrough, may be formed between the barrier and the relatively-moving element. A combination of the above-mentioned seal devices and other known seal devices may also be used.

Even though the suction chamber and the liquid's outlet path are physically separated in order to fully or partially prevent liquid residues from entering into the suction chamber, said at least one activation opening and a downstream portion, preferably a downstream drinking opening, of the liquid outlet path may be arranged in proximity of each other. In some embodiments, the activation opening may also include a portion of the liquid outlet path. Preferably, the drinking opening is provided within a drinking spout of a cap for the drinking receptacle. Such a relative placement of the activation opening(s) and said liquid outlet portion renders possible to establish a valve-activating underpressure P2 in the suction chamber, simultaneously allowing liquid to flow past the suction chamber and out of the liquid outlet portion.

The at least one activation opening may be present as any suitable number of openings of appropriate shape, size and extent. Several activation openings may also have similar or dissimilar size and shape. The at least one activation opening may be present as at least one opening in the wall element defining the suction chamber and constituting a portion of the valve's operating member, cf. subsequent examples of embodiments. For instance, the wall element may be formed into a drinking spout, a housing, a mantel or a cover. A suitable underpressure-activation of the valve's operating member may be achieved by arranging the activation opening(s) with an appropriate shape, size and length, insofar as the length corresponds to the wall element's material thickness in the region of interest thereof. Thus, a suitable flow profile for venting the suction chamber is achieved. Thereby, the operating member's response time and course of response may be suitably adjusted with respect to the application in question. Among other things, the response time will depend on the number of activation openings and the physical size and shape thereof. For example, small openings will result in slower response time. The response time may also be important with respect to ensuring sufficient venting and pressure-balancing of the drinking receptacle upon completion of liquid outflow.

An activation opening may also be provided with an airflow control device for controlling the course of venting in and out of the activation opening. The airflow control device may be arranged so as to promote airflow in one direction and restrain airflow in the opposite direction. For example, the device may be arranged in a manner allowing air that is sucked out of the suction chamber to underpressure-activate the operating member, to flow substantially easier and at a higher rate than that of a subsequent and oppositely directed airflow flowing into the suction chamber in order to balance the pressure therein. The flow control device may be used to provide rapid flow and short response time when discharging air from the suction chamber, but slow air influx into the suction chamber on the other hand accompanied with a delayed closing of the valve in order to balance the pressure in said drinking receptacle.

The flow control device may comprise two or more flexible flaps that are attached around the activation opening, preferably within and around the wall thereof, and which project obliquely out from the suction chamber. Whilst in position of rest, the flaps, and particularly the free ends thereof, are placed in proximity of each other, possibly fully or partially in contact with each other. Assembled in this manner, the flaps define a conical shape or other tapered shape, in which the cone tip or taper tip faces outwards from the suction chamber. When admitting air into the suction chamber, the airflow will force the flaps against each other and thus constrict the flow section of the activation opening, which has a flow-restraining effect on the airflow. When discharging air from the suction chamber, the airflow will force the flaps away from each other and thus increase said flow section, which has a flow-promoting effect on the airflow and facilitates the course of discharge. Such a flow control device may also contribute to prevent any liquid residues from entering into the suction chamber. Moreover, one or more activation openings each may be connected to or provided with a unidirectional valve (check valve) allowing air discharge from the suction chamber only. Preferably, such unidirectional valves should be placed closest to said downstream liquid outlet portion in order to minimize the risk of influx of liquid residues into the suction chamber.

### Short description of the drawings

Hereinafter, various examples of embodiments of the invention will be shown, in which:
- Figure 1: shows a vertical section through an underpressure-activated valve provided with the present hygiene-maintaining device, in which the valve includes a releasable operating member in the form of a drinking spout provided on the outside of a cap for a drinking receptacle (not shown), insofar as the valve is shown in its closed position;
- Figure 2: shows the valve according to figure 1 in its open position;
- Figure 3: shows a valve essentially resembling the valve according to figure 1, in which the valve according to figure 3 is provided with a suction chamber having an activation opening including, among other things, the valve's liquid outlet path, and in which the valve's operating member is fixedly integrated within the cap, insofar as the valve is shown in its closed position;
- Figure 4: shows, in plan view, the drinking spout according to figures 1 and 2 seen from above, in which the drinking spout includes a drinking region provided with activation openings leading into the suction chamber, insofar as the figure also shows a section line V-V through the drinking spout and an activation opening;
- Figure 5: shows a vertical section along section line V-V, the figure showing said suction chamber and an airflow control device provided in the activation opening;
- Figure 6: shows an enlarged section of the airflow control device and the activation opening according to figure 5;
- Figure 7: shows, in perspective, said cap and drinking spout according to figure 1, onto which is attached a releasable protective cover for preventing unintended valve opening and spilling on the drinking spout;
- Figure 8: shows the cap and the drinking spout according to figure 7 without an attached protective cover;
- Figure 9: shows a vertical section through an opening-force-maximizing, underpressure-activated valve that is provided with the present hygiene-maintaining device, and which is provided within a releasable drinking spout on the outside of a cap for a drinking receptacle (not shown), in which the valve's operating member comprises a conically shaped membrane, and in which the valve is shown in its closed position, insofar as the figure also shows a section line XI-XI through the drinking spout and an activation opening;
- Figure 10: shows the valve according to figure 9 in its open position;
- Figure 11: shows a cross section through the valve and its valve stem as viewed along section line XI-XI displayed on figure 9;
- Figures 12-14: show various steps in a method of mould casting, in one mould piece, the operating member, the bracing element and the seal member according to figures 1 and 2.

Furthermore, the figures are schematic and may be somewhat distorted. By and large, similar or analogous details of the figures will be given the same reference numerals hereinafter.

### Examples of embodiments of the invention

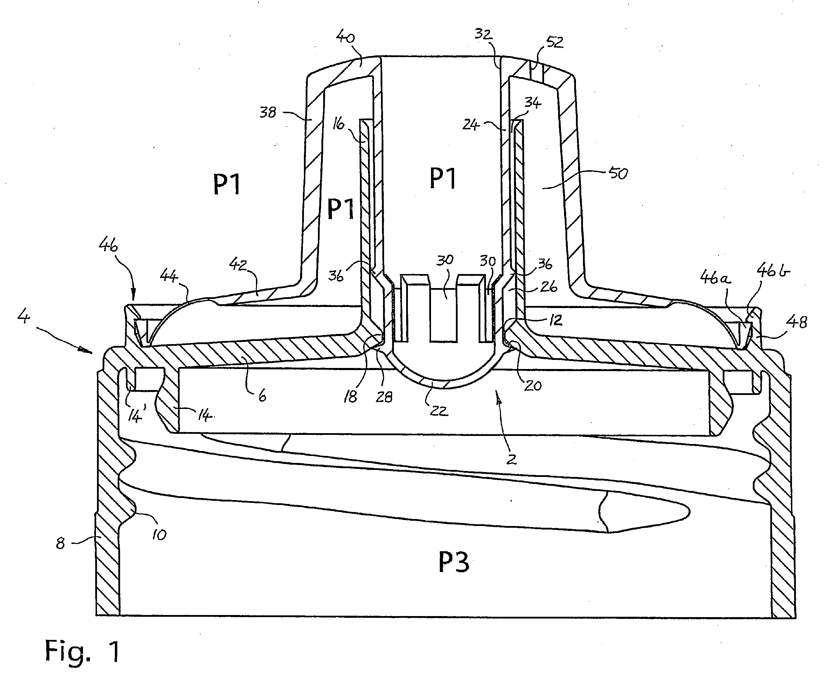

The valve embodiments according to figures 1-3 have many similarities to some examples of embodiments in said patent NO 316506 (Naesje), and which concerns a device for underpressure-activation of a valve for a drinking receptacle. The present valve embodiments employ the same principle of operation as the valves according to NO 316506.

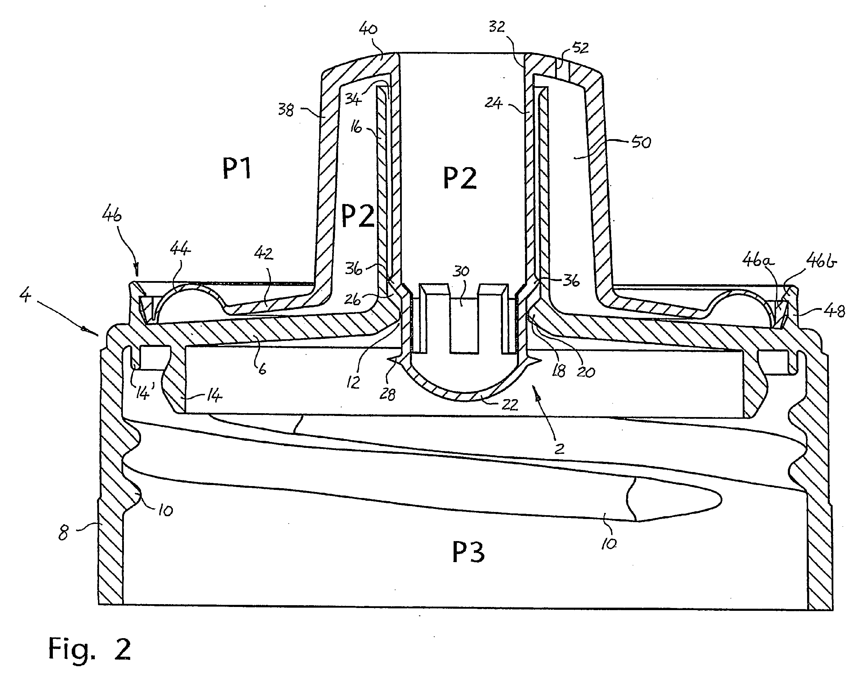

Figures 1 and 2 show an underpressure-activated valve 2 provided on the outside of a cap 4 consisting of an end wall 6 and a circular mantel 8. The mantel 8 is provided with internal threads 10 for connection to a bottle (not shown). Whilst in position of use, the cap 4 and the bottle have an internal pressure P3 that may be larger than the ambient pressure P1 of the bottle, for example when the bottle contains a carbonated liquid. In this connection, the end wall 6 constitutes the above-mentioned partition between the inner space of the bottle and the outer surroundings thereof. The partition 6 is provided with a centred partition opening 12. At its inside, the partition 6 is also provided with two concentric seal flanges 14, 14', between which a bottleneck (not shown) may be placed in a pressure-sealing manner by screwing and fixing the bottleneck within the cap 4.

At its downstream side, the partition 6 is connected to a tube-shaped body in the form of a sleeve 16 that is arranged concentrically around the partition opening 12, and which projects axially and freely out from the partition 6. The sleeve 16 constitutes the above-mentioned separating barrier, and thus the present hygiene-maintaining device in the valve 2.

A ring-shaped bulb 18 formed in the transition between the partition 6 and the sleeve 16 defines the partition opening 12. At its upstream side, the bulb 18 is formed with a valve seat 20 for the valve's valve head 22, which constitutes the valve's seal member. The valve head 22 is dome-shaped and is formed in an upstream and free end of a short discharge tube 24, which constitutes the valve's bracing element. The discharge tube 24 is provided within the sleeve 16, whereby the tube 24 and the sleeve 16 define an annular interstice 26. In order to fully or partially prevent liquid outflow, the valve head 22 is also provided with an external, annular and elastic valve head seal lip 28. The seal lip 28 is placed in a sealing manner against the valve seat 20 when the valve 2 is inactive and closed, as shown in figure 1. In this example, the seal lip 28 is conically shaped and terminates in a point at its outer free end. This taper-shape ensures that the seal lip is most flexible at its outer perimeter and thus easily engage against the valve seat 20 during closing of the valve 2. The seal lip 28 may also have a different shape.

Immediately downstream of the valve head seal lip 28, the discharge tube 24 is provided with several tube wall openings 30 in the form of axial and peripherally distributed discharge slots formed in the wall of the tube 24. When the valve 2 is open, liquid may flow through the slots 30, into the tube 24 and onwards therein to exit via a drinking opening 32 provided at the downstream end thereof. Immediately downstream of the discharge slots 30, the discharge tube 24 is expanded diametrically and thus is expanded in this downstream longitudinal portion. Thereby, said annular interstice 26 outside the discharge tube 24 is provided with a constriction portion 34 directly opposite said expanded longitudinal portion of the discharge tube 24. Moreover, the discharge tube 24 is provided with an external sliding seal in the form of a ring-shaped liquid-sealing lip 36, which is placed movably and sealingly against the inside of the sleeve 16.

The downstream end of the discharge tube 24 is connected to the valve's operating member, which comprises a manoeuvre portion and an attachment portion.

The manoeuvre portion includes a relatively rigid and axially extending drinking spout 38 that concentrically encloses the sleeve 16 and the discharge tube 24 therein, and which is connected to the tube 24 via said drinking opening 32 at the downstream end thereof. Around the drinking opening 32, the drinking spout 38 consists of an essentially radially extending drinking region 40. The manoeuvre portion also includes a flange portion 42, which in this embodiment essentially extends outwardly and radially from the foot of the drinking spout 38. The flange portion 42 is provided with at least one concentric and flexible zone 44, this example only showing one such zone. The flexible zone 44 results from forming the flange portion 42 substantially thinner in its zone 44.

In the embodiment according to figures 1 and 2, the operating member is releasably attached within an external, collar-shaped housing 48 arranged in a circle on the outside of the end wall 6 (the partition) of the cap 4. The peripheral attachment portion of the operating member is provided with an axially and outwardly directed, ring-shaped grip rim 46a, whereas the housing 48 is provided with a grip claw 46b at the free end thereof. The figures show the grip claw 46b when releasably gripping over the grip rim 46a and locking the attachment portion within the housing 48. Collectively the grip rim 46a and the grip claw 46b constitute a snap coupling 46 for releasable interconnection of the operating member and the partition 6. Other suitable snap couplings may also be used for said interconnection.

Furthermore, the valve 2 according to figures 1 and 2 is provided with a suction chamber 50 for activation thereof. The partition 6, the operating member (which includes the drinking spout 38), an outer portion of the discharge tube 24 and the sleeve 16 define the suction chamber 50. In the drinking region 40, the suction chamber 50 connected to its external surroundings and the ambient pressure P1 via a total of three activation openings 52 through the wall of the drinking spout 38. Only one activation opening 52 is shown in figures 1 and 2. When a consumer places his/her lips around the drinking opening 32 as well as the drinking region 40 and sucks air out of the suction chamber 50 through the activation openings 52, an underpressure P2 is established in the chamber 50. Such a pressure condition is shown in figure 2. A resulting differential pressure (P1-P2) thus exerts a valve-activating compressive force on the operating member. The compressive force makes the operating member's flexible zone 44 yield and fold up, thereby allowing the discharge tube 24 to move inwardly towards the partition 6 to push the valve head 22 away from the valve seat 20. Consequently, the valve 2 opens to liquid outflow via said discharge slots 30 and the discharge tube 24, as shown in figure 2. Thereby, liquid consumption and underpressure-activation of the suction chamber 50 may take place simultaneously without liquid entering into the suction chamber 50. When the consumer removes his/her lips from the drinking spout 38 after liquid consumption, the underpressure P2 in the suction chamber 50 is pressure-balanced against the ambient pressure P1 by allowing air to enter into the suction chamber 50 via the activation openings 52.

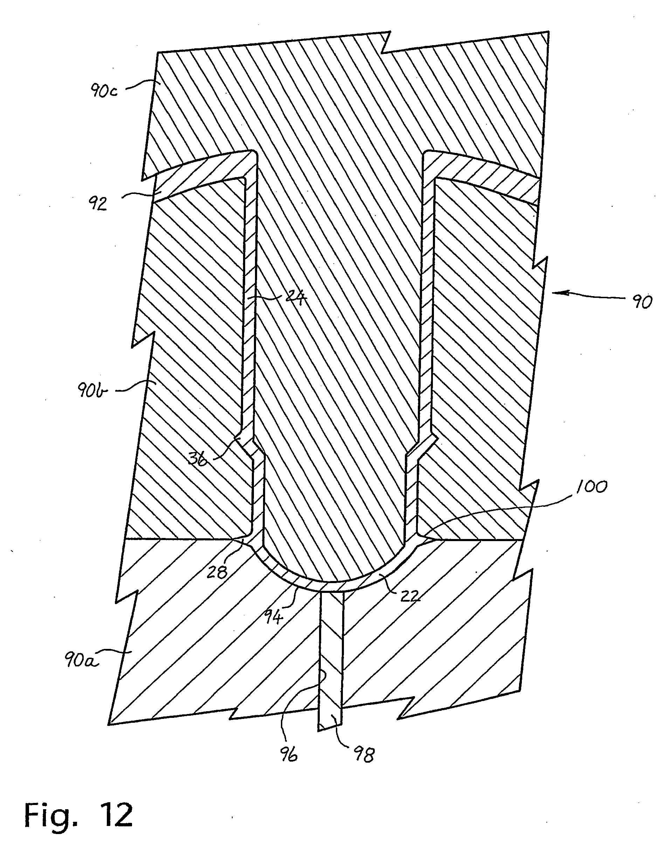

Preferably, the operating member, the discharge tube 24, the valve head 22 and the seal lips 28, 36 are formed from one and the same material, preferably a plastics material, and preferably moulded in one mould piece by means of a suitable casting method. Among other things, such a casting method is described below, and in connection with figures 12-14. This, however, is not a requirement, and said valve elements may also be formed into separate elements. Moreover, various types of materials having different valve element properties may be employed.

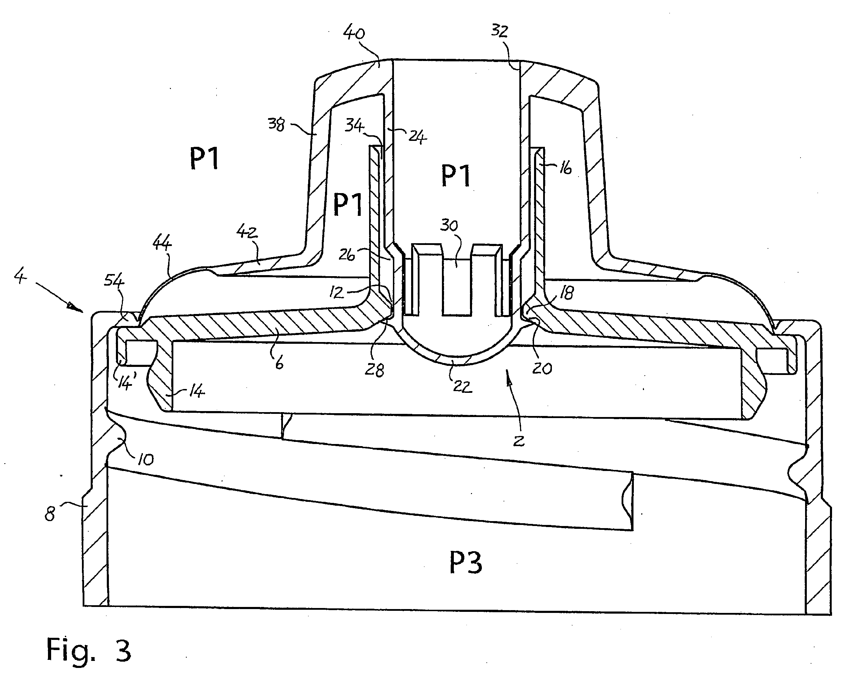

The valve embodiment according to figure 3 is different from the embodiment according to figures 1 and 2 in that the drinking spout 38 is provided with a different activation opening. The discharge tube 24 is not provided with a ring-shaped liquid-sealing lip 36 bearing sealingly and movably against the inside of the sleeve 16. The valve 2 is activated in response to air being sucked out of the suction chamber 50 via an airflow path comprising the drinking opening 32, the discharge tube 24 and its discharge slots 30, and via said interstice 26 between the sleeve 16 and the discharge tube 24. The activation opening of the suction chamber 50 thus includes a portion of the liquid outlet path. Even though this valve embodiment includes a separating barrier in the form of a sleeve 16, it is obvious that liquid residues may enter more easily into the suction chamber 50 than when a liquid-sealing lip 36 seals against the inside of the sleeve 16. Liquid residues may be prevented from entering the suction chamber 50 by providing said constriction portion 34 of the interstice 26 with a suitably narrow clearance that restrains or prevents liquid flow therethrough, but which is sufficiently large to allow air to pass therethrough.

In the embodiment according to figure 3, however, the peripheral attachment portion of the operating member shaped as said circular mantel 8 of the cap 4, in which the cap mantel 8 is formed with internal threads 10 for connection to a bottle (not shown). Thus, the operating member, the bracing element and the seal member of the valve 2 are integrated with the cap 4. Preferably, these constructional elements are moulded in one and the same material, preferably a plastics material, and preferably in one mould piece by means of a suitable casting method, cf. figures 12-14. Furthermore, the end wall 6 (the partition) of the cap 4 consists of a circular plate releasably placed against a radial shoulder 54 provided at the outer end of the mantel 8. Similar to the preceding embodiment, also the partition plate 6 is provided with two seal flanges 14, 14' to be placed against a bottleneck (not shown) for sealing of pressure. Thereby, the partition plate 6 and its sleeve 6 may be easily assembled with said valve mould piece.

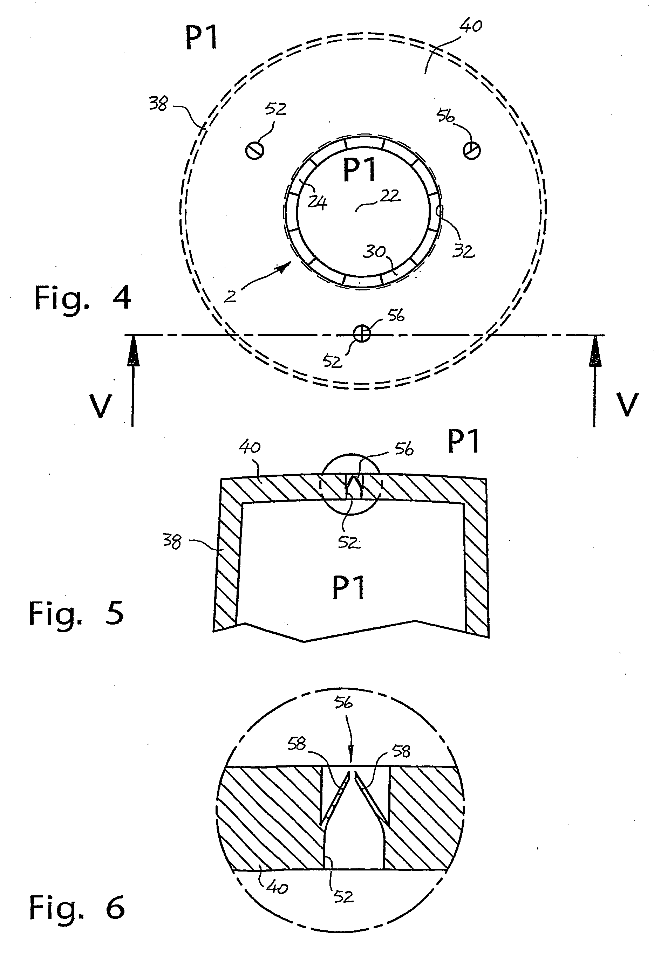

Figure 4 shows the drinking spout 38 and its drinking region 40. The drinking region 40 is provided with three activation openings 52 that are concentrically arranged around the drinking opening 32 in the drinking spout 38. According to the invention, one or more activation openings 52 of the suction chamber 50 may be provided with an airflow control device. In this example, each activation opening 52 is provided with an airflow control device 56.

Figures 5 and 6 show an airflow control device 56 whilst in position of rest and in greater detail. The device 56 consists of at least two flexible flaps 58 that are formed within and around the wall of the activation opening 52, and which project obliquely out from the suction chamber 50. Whilst in position of rest, the free ends of the flaps 58 are placed in a conical shape in proximity of each other. This conical shape has a flow-restraining effect on a pressure-balancing airflow flowing therethrough and into the suction chamber 50 after completed liquid consumption. On the contrary, an underpressure-activating and emanating airflow will force the flaps 58 away from each other and thus facilitate the course of discharge, as described above.

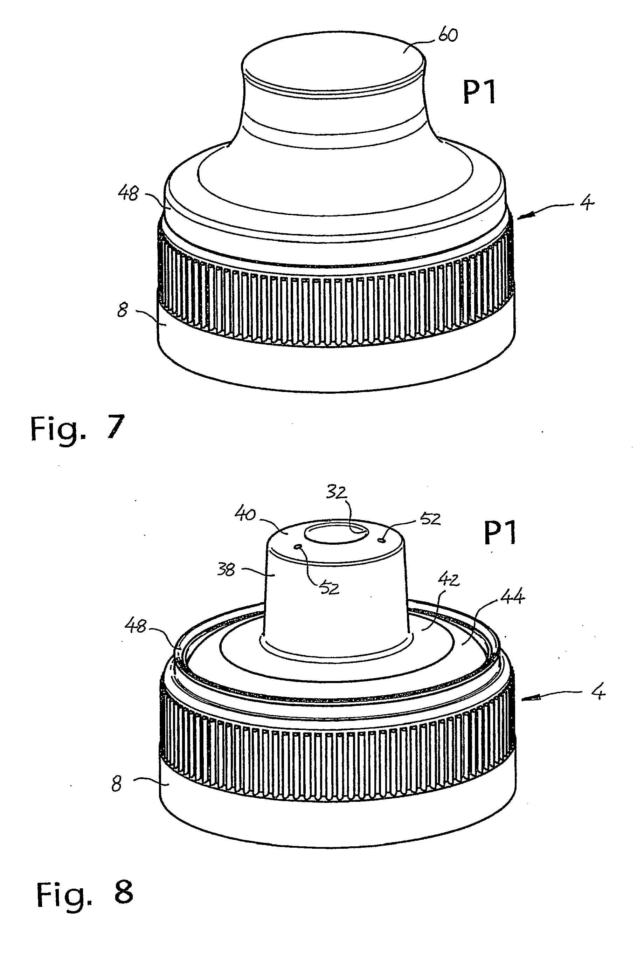

Figure 7 shows the above-mentioned cap 4, onto which is attached a releasable protective cover 60 over the drinking spout 38. The cover 60 prevents unintended valve opening and spilling on the drinking spout 38. The protective cover 60 may also be provided with a cover removal indicator warning about preceding removal of the cover 60. Examples of such indicators are known from Norwegian patent application 2002 5197 (Naesje), among other things. Moreover, the cover 60 may also be attached to the valve construction by means of, for example, a flexible strap or a hinge (not shown). In figure 8, however, the cover 60 is removed from the cap 4, thereby showing the drinking spout 38, the drinking opening 32 and the activation openings 52.

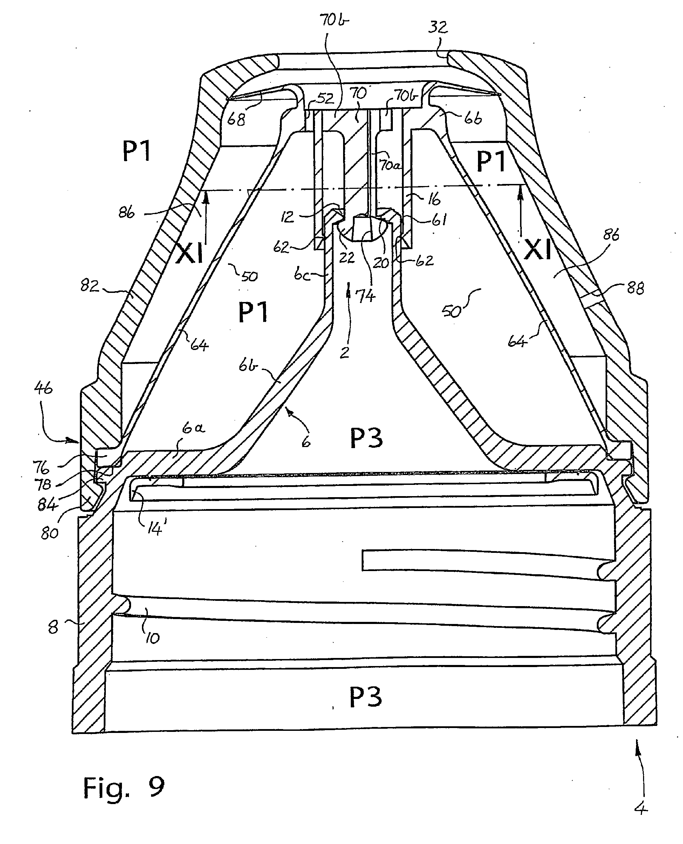

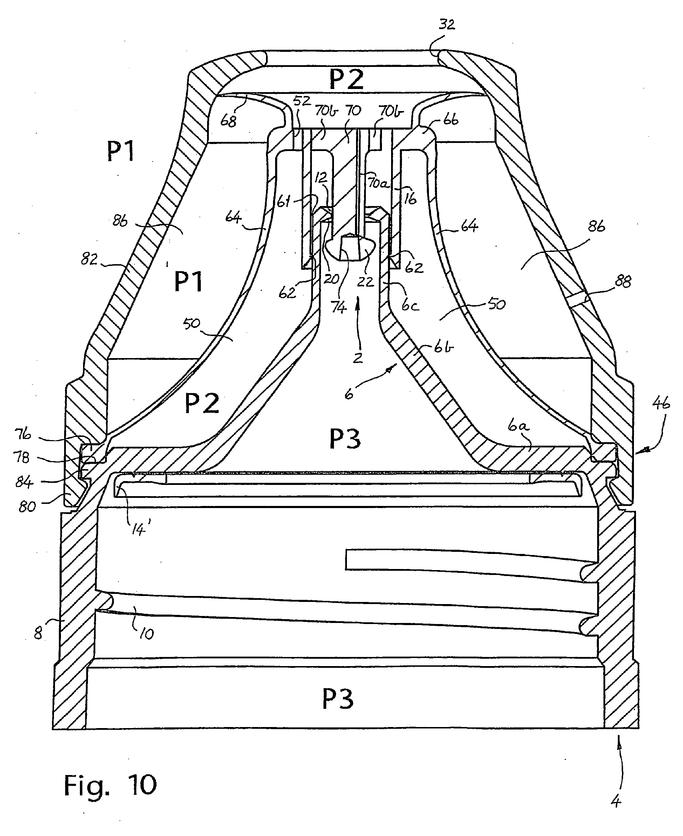

The valve embodiment according to figures 9-11 have many similarities to a valve device according to said Norwegian patent application 2002 5193 (Naesje), which concerns an opening-force-maximizing device of an underpressure-activated valve for a drinking receptacle. The valve embodiment according to figures 9 and 10 employ the same principle of operation as the valve according to the last-mentioned patent application.

Figures 9-11 also show a valve 2 arranged on the outside of a cap 4 provided with internal threads 10. The cap 4 also includes a concentric partition 6 that is provided with a centred partition opening 12, and which is formed continuous with the cap mantle 8. Also this partition 6 has an internal seal flange 14' for sealing against a bottleneck (not shown). Viewed in downstream sequence, this partition 6 consists of a flange portion 6a; an axially extending, conical portion 6b; and an axially extending, tube-shaped portion 6c, the downstream of which includes the partition opening 12.

A free end of an axially extending sleeve 16 concentrically encloses the partition opening 12 and a length of the tube-shaped partition portion 6c. The partition portion 6c and the sleeve 16 thus define an annular interstice 61. The sleeve 16 is connected to the operating member of the valve 2 and projects out in an upstream direction from the operating member. Similar to the preceding embodiments, also the sleeve 16 is connected to a liquid-flow-restraining device arranged so as to fully or partially prevent liquid flow via said annular interstice 61 and into the suction chamber 50 of the valve 2. In this example, the liquid-flow-restraining device is comprised of an internal sliding seal in the form of a ring-shaped liquid-sealing lip 62 that is provided at the inside of the sleeve 16, and which is placed movably and sealingly against the outside of the tube-shaped partition portion 6c. The sleeve 16 constitutes the above-mentioned separating barrier and the present hygiene-maintaining device in the valve 2.

In this embodiment, the valve's manoeuvre portion comprises a flexible, sleeve-shaped membrane 64 and a relatively rigid attachment ring 66. The membrane 64 is axially extending and conically shaped, whereby the axial end portions of the membrane 64 include a wide and a narrow diameter portion, respectively. The wide diameter portion is connected to the attachment portion of the operating member and encloses both the sleeve 16 and said partition portions 6a, 6b and 6c, whereas the narrow diameter portion is connected to the attachment ring 66 at the outer perimeter thereof. The outer perimeter of the attachment ring 66 is also provided with an external and flexible seal collar 68, the function of which will be described in further detail below. The inner perimeter of the attachment ring 66 is connected to said sleeve 16.

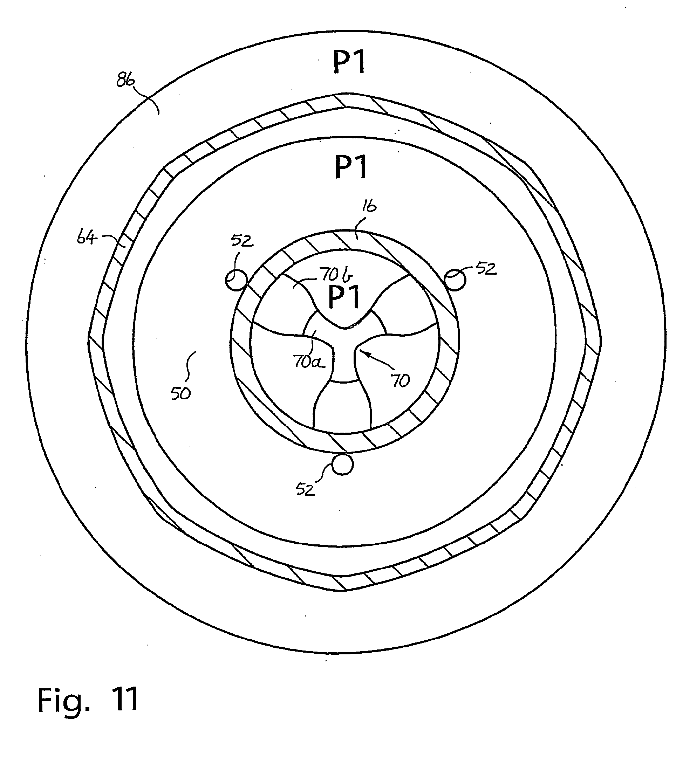

The partition 6, the liquid-sealing lip 62, the sleeve 16 and the operating member (which includes the membrane 64 and the attachment ring 66 define the suction chamber 50 of the valve 2. The suction chamber 50 is connected to its external surroundings and the ambient pressure P1 via three activation openings 52 through the wall of the attachment ring 66, and in a region between the sleeve 16 and said seal collar 68. Only one activation opening 52 is shown in figures 9 and 10, whereas figure 11 shows all activation openings 52 in the attachment ring 66. In an embodiment not shown, however, the attachment ring 66 does not need to be provided with activation openings 52. If the above-mentioned interstice 61 between the sleeve 16 and the tube-shaped partition portion 6c is provided with a suitably narrow clearance, this flow restriction will restrain or prevent liquid flow therethrough, but it will allow air to pass therethrough. The at least one activation opening of the suction chamber 50 thus includes the inside of the sleeve 16 and the interstice 61. This corresponds to the liquid-flow-restraining device according to figure 3.

A bypassable valve stem 70 is provided within the sleeve 16. In this embodiment, the valve stem 70 consists of three radially and outwardly projecting, peripherally distributed rib elements 70a having a common, central joining point. At its downstream end, each rib element 70a is provided with a further outwardly projecting attachment rib 70b, which is attached to the inside of the sleeve 16 vis-a-vis the attachment ring 66. The rib elements 70a and the attachment ribs 70b are peripherally distributed at an equal angle distance therebetween. This is best shown in figure 11, which shows a cross section through the valve stem 70, among others, as viewed along section line XI-XI according to figure 9. Figures 9 and 10 show only two of the attachment ribs 70b of the valve stem 70, one attachment rib 70b of which is located behind the vertical section of the figure. Such a valve stem construction allows liquid to flow past the attachment ribs 70b and out of the valve 2. Other suitable, bypassable valve stem designs may also be employed. The valve stem 70 constitutes the valve's bracing element. Alternatively, the valve stem 70 may be replaced by the above-mentioned discharge tube 24, which preferably is provided with said dome-shaped valve head 22.

The stem 70 is conveyed through the partition opening 12, and the stem's upstream end is provided with a flexible valve head 22. Whilst in position of rest, the valve head 22 is positioned in a positive pressure-sealing manner against a valve seat 20 provided at the upstream side of the tube-shaped partition portion 6c. Figure 9 shows the valve 2 in its inactive and closed position. The valve head 22 also includes an internal hollow 74 making the valve head 22 elastically compressible when pushed through the partition opening 12 during assembling of the valve 2.

In this embodiment, the operating member's peripheral attachment portion consists of an attachment flange 76 connected to said wide diameter portion of the membrane 64. The flange 76 is positioned in a peripheral recess 78 in the partition 6. The attachment flange 76 is releasably attached in the recess 78 by means of a ring-shaped grip claw 80, which is arranged in a lower end of a drinking-spout-shaped cover 82 enclosing the valve 2. The grip claw 80 grips over the attachment flange 76 and a supporting, ring-shaped protrusion 84 projecting radially out from the partition 6. This releasable attachment arrangement also constitutes a snap coupling 46.

At its downstream end, the drinking-spout-shaped cover 82 is provided with a centred drinking opening 32 positioned immediately downstream of the operating member's attachment ring 66 and its flexible seal collar 68. The collar 68 is placed movably and sealingly against the inside of the cover 82 and prevents liquid from entering into a pressure balancing chamber 86 defined by the operating member, the seal collar 68 and the cover 82. The pressure balancing chamber 86 communicates with the ambient pressure P1 via at least one air vent in the form of a air opening 88 through the wall of the cover 82 and vis-a-vis the pressure balancing chamber 86. Other types of air vents or air channels may also be employed, for example venting via said snap coupling 46 for the cover 82.

The valve 2 according to figures 9-11 may also be underpressure-activated by means of a consumer placing his/her lips around the drinking opening 32 and sucking air out of the suction chamber 50 via the activation openings 52 in the attachment ring 66, whereby an underpressure P2 is established in the chamber 50. Such a pressure condition is shown in figure 10. A resulting differential pressure (P1-P2) thus exerts a valve-activating compressive force on the membrane 64 and bends it radially inwards. Due to this membrane construction, this membrane-bending movement is converted into an axial movement of the attachment ring 66, the sleeve 12 and the valve stem 70 move inwardly towards the partition 6, whereby the valve head 22 is pushed away from the valve seat 20. Thereby, the valve 2 opens to liquid outflow through the sleeve 12, between the attachments ribs 70b and further out through the drinking opening 32 in the drinking-spout-shaped cover 82, as shown in figure 10.

The valve embodiment according to figures 9-11 also allows liquid consumption and underpressure-activation to take place simultaneously without any liquid entering into the suction chamber 50 or into said pressure balancing chamber 86. After completed liquid consumption, the suction chamber 50 is pressure-balanced via the drinking opening 32 and the activation openings 52 in the attachment ring 66. Such activation openings 52 may also be provided with airflow control devices, as described above.

Preferably, the attachment flange 76, the membrane 64, the attachment ring 66, the seal collar 68, the sleeve 16, the liquid-sealing lip 62, the valve stem 70 and the valve head 22 are made from one and the same material, preferably a plastics material, and preferably moulded in one mould piece by means of a suitable casting method, as described hereinafter.

Figures 12-14 show various steps in a method of mould casting, in one mould piece, the operating member, the bracing element and the seal member for the valve according to figures 1 and 2. In this example, the mould piece consists of a plastics material, but other suitable casting materials may also be used.

Figure 12 shows a segmented casting mould 90 of suitable material whilst in position of use during mould casting of a plastics mould piece 92. When finished, the mould piece 92 is to become the operating member, the bracing element and the seal member according to the first embodiment (cf. figures 1 and 2). The mould casting is carried out in accordance with a known plastics casting method. The casting mould 90 consists of a lower casting segment 90a, an intermediate casting segment 90b and an upper casting segment 90c. If appropriate, one or more of the casting segments 90a, 90b, 90c may consist of two or more segment elements, which are assembled during the casting process and forming the casting segment in question. In the following, however, each casting segment 90a, 90b, 90c will be described as one segment. During the mould casting, the position of the casting segments 90a, 90b, 90c relative to each is such that they form a mould cavity defining both sides of the plastics mould piece 92.

The lower casting segment 90a is provided with a dome-shaped depression 94, the shape of which corresponds to the outside of the dome-shaped valve head 22 and a lower portion of its radially and outwardly projecting, pointed and elastic valve head seal lip 28. According to the method, the casting segment 90a is also provided with a through-going hole 96 terminating in the depression 94. Then, a releasable push rod 98 of suitable material is placed in the hole 96, the upper end of the push rod 98 being placed near or flush with the surface of the depression 94.

The intermediate casting segment 90b has a shape corresponding to the inside of the operating member, to the outside of the discharge tube 24 (in this example, inclusive of the liquid-sealing lip 36 and the above-mentioned discharge slots 30 in the wall of the tube 24), and to an upper portion of valve head seal lip 28, insofar as the upper portion is shaped as a seat 100 in the casting segment 90b. Thereby, the casting segments 90a and 90b are releasably assembled around the valve head seal lip 28.

The upper casting segment 90c has a shape corresponding to the outside of the operating member and to the inside of the discharge tube 24. Concurrently, the discharge tube 24 has a tapered perimeter shape in the direction of its valve head 22, which facilitates the subsequent extraction of the discharge-pipe-shaped portion of the upper casting segment 90c when the mould casting is completed.

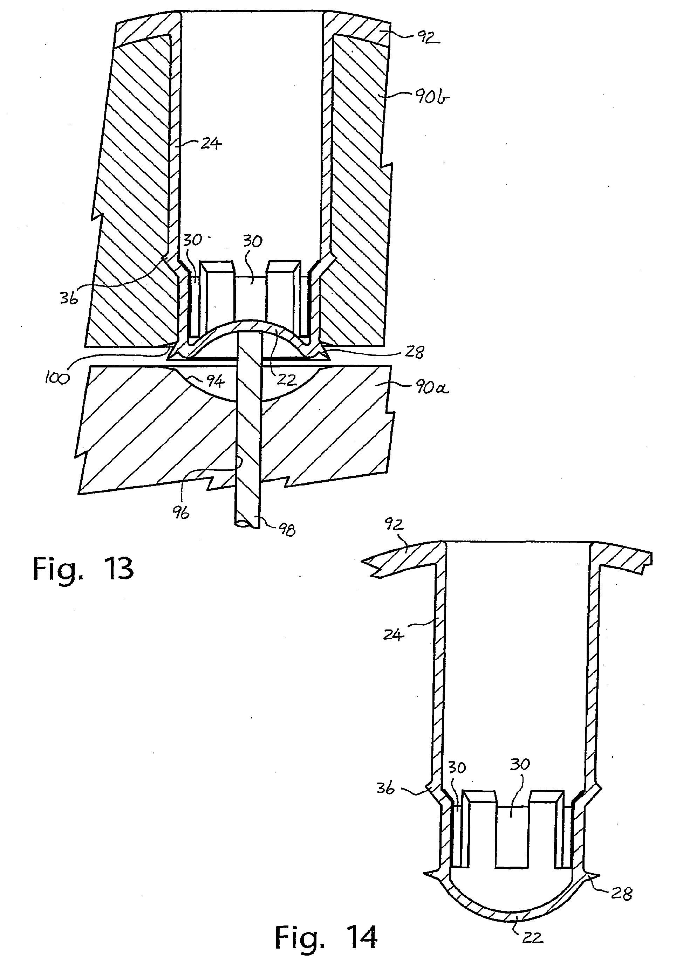

After having completed the casting of the plastics mould piece 92 in the mould cavity of the casting mould 90, the upper casting segment 90c is removed from the intermediate casting segment 90b. Thereby, the upper casting segment 90c is liberated from the operating member and the inside of the discharge tube 24, as shown in figure 13. The lower casting segment 90a is also pulled somewhat away from the intermediate casting segment 90b, whereby the dome-shaped valve head 22 projects out from the intermediate casting segment 90b at the same time as the radially and outwardly projecting valve head seal lip 28 is placed in locking manner against said seat 100 in the intermediate casting segment 90b. From a casting-technical point of view, this represents a problem. Subsequent extraction of the discharge tube 24 of the plastics mould piece 92 from the intermediate casting segment 90b may cause damage to or destruction of the valve head seal lip 28. In order to avoid such damage or destruction, said push rod 98 in the hole 96 of the intermediate casting segment 90b is therefore pushed up towards the dome-shaped valve head 22, which consists of an elastic plastics material, and deflects it elastically inwards into the discharge tube 24. Simultaneously, and due to the elastic valve head deflection, the valve head seal lip 28 is deflected away from its seat 100 in the casting segment 90b and inwards into the discharge tube 24, as shown in figure 13. Thereby, the discharge tube 24 and its valve head seal lip 28 may be liberated and extracted from the intermediate casting segment 90b. Then, the valve head 22 may be moved back to its original and outwardly projecting dome-shape, as shown in figure 14, due to its inherent elasticity, or by pushing it back.

The present embodiments of valves 2 according to the invention are specifically designed for manufacturing by means of suitable casting methods. Such a valve 2, and a potential cap 4 associated therewith, may thus be mass-produced. For this reason, it is particularly preferable to form the constructional elements of the valve 2, and also a potential cap 4 therefore, as continuous as possible and with as few numbers of elements as possible. This will contribute to increase the efficiency of both the manufacturing and the assembling of the valve 2, possibly together with a cap 4.

With respect to the valve embodiments according to figures 1-3, the cap 4 with its partition 6, bulb 18, partition opening 12 and sleeve 16 may also be moulded in one mould piece for subsequent assembly with the above-mentioned mould piece 92. Analogous mould pieces may also be formed for constructional elements incorporated in the valve embodiments according to figures 9-11.

## Claims

1. A hygiene-maintaining device of an underpressure-activated valve (2) for a drinking receptacle;
- in which the valve (2), whilst in position of use, pressure-sealingly encloses a downstream side of an outlet opening (12) in a partition (6) associated with the drinking receptacle, the partition (6) being either a wall portion of the drinking receptacle, or a wall portion of a cap (4) for the receptacle;
- in which the valve (2) comprises a movable operating member, a bracing element (24) and a seal member (22) that, whilst in position of rest, seals off said partition opening (12), wherein the seal member (22) is a dome-shaped and elastic valve head;
- in which the operating member is connected to a suction chamber (50) within which an underpressure (P2) may be established in order to activate and move the operating member into a valve-opening position, thereby allowing liquid to flow out via the partition opening (12) and further onwards through a liquid outlet path in the valve (2), the operating member being pressure-balanced against the ambient pressure (P1) of the drinking receptacle; and
- in which the suction chamber (50) is connected to at least one activation opening (52) through which the underpressure (P2) in the chamber (50) may be established, wherein the suction chamber (50) is separated from said liquid outlet path through the valve (2), which fully or partially prevents liquid residues from entering into the suction chamber (50) so as to create subsequent unhygienic conditions therein, wherein the partition (6) is provided with a barrier enclosing both the downstream side of partition opening (12) and the bracing element (24), whereby the suction chamber (50) is separated from said liquid outlet path,
**characterized in that**:
- the barrier is a sleeve (16) that is connected to the partition (6), and which projects freely out therefrom;
- wherein said bracing element (24) is a discharge tube (24), whereby the sleeve (16) encloses the discharge tube (24) and defines an annular interstice (26) therebetween;
- wherein said downstream end of the discharge tube (24) is provided with a drinking opening (32) connected to a manoeuvre portion of the operating member;
- wherein a peripheral attachment portion of the operating member is connected to the partition (6), whereby the partition (6), the operating member, a portion of the discharge tube (24) and the sleeve (16) define said suction chamber (50);
- wherein an upstream end of the discharge tube (24) is provided with said seal member (22), which in its position of rest bears pressure-sealingly against a valve seat (20) at the upstream side of the partition opening (12);
- wherein the discharge tube (24), immediately downstream of the seal member (22), is provided with at least one tube wall opening (30) through which liquid may enter into and through the tube (24); and
- wherein said interstice (26), immediately downstream of the at least one tube wall opening (30), is connected to a liquid-flow-restraining device arranged so as to fully or partially prevent liquid flow via the interstice (26) and into the suction chamber (50).

2. The hygiene-maintaining device according to claim 1, **characterized in that** the discharge tube (24) is expanded diametrically downstream of the at least one tube wall opening (30), whereby the perimeter shape of the discharge tube (24) is gradually reduced in the upstream direction.

3. The hygiene-maintaining device according to claim 1 or 2, **characterized in that** said liquid-flow-restraining device is an annular liquid-sealing lip (36) that is provided on the outside of the discharge tube (24), and which is placed movably and sealingly against the inside of the sleeve (16); and
- wherein the operating member is provided with at least one activation opening (52) leading into the suction chamber (50).

4. The hygiene-maintaining device according to claim 3, **characterized in that** the at least one activation opening (52) is provided in proximity of said drinking opening (32), whereby liquid outflow and underpressure-activation of the suction chamber (50) may take place simultaneously.

5. The hygiene-maintaining device according to claim 1 or 2, **characterized in that** said liquid-flow-restraining device is a constriction portion (34) of said interstice (26) between the discharge tube (24) and the sleeve (16); and
- wherein the at least one activation opening (52) of the suction chamber (50) thus comprises the interstice (26) between the sleeve (16) and the tube (24), and also the discharge tube (24) with its at least one tube wall opening (30) and its drinking opening (32).

6. The hygiene-maintaining device according to one of claims 1-5, **characterized in that** the manoeuvre portion of the operating member includes a drinking spout (38) connected to the drinking opening (32) of the discharge tube (24).

7. The hygiene-maintaining device according to claim 6, **characterized in that** the manoeuvre portion also includes a flange portion (42) extending outwardly from the foot of the drinking spout (38), and which is provided with at least one flexible zone (44) being resilient upon movement of the operating member.

8. The hygiene-maintaining device according to one of claims 1-7, **characterized in that** the peripheral attachment portion of the operating member is releasably connected to the partition (6).

9. The hygiene-maintaining device according to claim 8, **characterized in that** the attachment portion is releasably attached within a collar-shaped housing (48) arranged in a circle on the outside of an end wall of a cap (4), the end wall constituting said partition (6).

10. The hygiene-maintaining device according to claim 8 or 9, **characterized in that** the releasable connection is a snap coupling (46).

11. The hygiene-maintaining device according to one of claims 1-7, **characterized in that** the peripheral attachment portion of the operating member is formed into a mantel (8) of a cap (4), whereby the operating member is fixedly integrated within the cap (4).

12. A hygiene-maintaining device of an underpressure-activated valve (2) for a drinking receptacle;
- in which the valve (2), whilst in position of use, pressure-sealingly encloses a downstream side of an outlet opening (12) in a partition (6) associated with the drinking receptacle, the partition (6) being either a wall portion of the drinking receptacle, or a wall portion of a cap (4) for the receptacle;
- in which the valve (2) comprises a movable operating member, a bracing element (70) and a seal member (22) that, whilst in position of rest, seals off said partition opening (12);
- in which the operating member is connected to a suction chamber (50) within which an underpressure (P2) may be established in order to activate and move the operating member into a valve-opening position, thereby allowing liquid to flow out via the partition opening (12) and further onwards through a liquid outlet path in the valve (2), the operating member being pressure-balanced against the ambient pressure (P1) of the drinking receptacle; and
- in which the suction chamber (50) is connected to at least one activation opening (52) through which the underpressure (P2) in the chamber (50) may be established, wherein the suction chamber (50) is separated from said liquid outlet path through the valve (2), which fully or partially prevents liquid residues from entering into the suction chamber (50) so as to create subsequent unhygienic conditions therein, wherein the operating member is provided with a barrier enclosing both the partition opening (12), at the downstream side thereof, and the bracing element (70), whereby the suction chamber (50) is separated from said liquid outlet path, **characterized in that**:
- the barrier is a sleeve (16) that is connected to a manoeuvre portion of the operating member, and which projects freely out therefrom and encloses a length of an axially extending and tube-shaped partition portion (6c), the downstream end of which includes the partition opening (12), whereby the partition portion (6c) and the sleeve (16) define an annular interstice (61) ;
- wherein said manoeuvre portion comprises an attachment ring (66) and a flexible, sleeve-shaped, axially extending and conically shaped membrane (64), whereby the axial end portions of the membrane (64) comprise a wide and a narrow diameter portion;
- wherein an inner perimeter of the attachment ring (66) is connected to the sleeve (16), whereas an outer perimeter thereof is connected to the narrow diameter portion of the membrane (64);
- wherein the wide diameter portion of the membrane (64) is connected to the operating member's peripheral attachment portion, which is connected to the partition (6), and thus encloses both the sleeve (16) and the tube-shaped partition portion (6c), whereby the partition (6), the operating member and the sleeve (16) define said suction chamber (50);
- wherein said bracing element is a bypassable valve stem (70) attached within the sleeve (16) and provided with said seal member (22) at the upstream end thereof, the seal member (22) bearing pressure-sealingly against a valve seat (20) at the upstream side of the partition opening (12) whilst in position of rest; and
- wherein said interstice (61) is connected to a liquid-flow-restraining device arranged so as to fully or partially prevent liquid flow via the interstice (61) and into said suction chamber (50).

13. The hygiene-maintaining device according to claim 12, **characterized in that** said valve stem (70) is attached to the sleeve (16) by means of at least one attachment rib (70b), whereby liquid may flow past the at least one attachment rib (70b) and out of the valve (2).

14. The hygiene-maintaining device according to claim 12 or 13, **characterized in that** said liquid-flow-restraining device is an annular liquid-sealing lip (62) that is provided at the inside of the sleeve (16), and which is placed movably and sealingly against the outside of the tube-shaped partition portion (6c); and
- wherein the attachment ring (66) is provided with at least one activation opening (52) arranged outside of the sleeve (16) and leading into the suction chamber (50), whereby liquid consumption and underpressure-activation of the suction chamber (50) may take place simultaneously.

15. The hygiene-maintaining device according to claim 12 or 13, **characterized in that** said liquid-flow-restraining device consists of said interstice (61) provided with a narrow clearance that restrains or prevents liquid flow therethrough, but which is sufficiently large to allow air to pass therethrough; and
- wherein the at least one activation opening (52) of the suction chamber (50) thus includes the inside of the sleeve (16 and the interstice (61).

16. The hygiene-maintaining device according to one of claims 13-15, **characterized in that** the attachment ring (66), at the outer perimeter thereof and outside the at least one activation opening (52), is provided with an external and flexible seal collar (68) movably and sealingly placed against the inside of a surrounding, drinking-spout-shaped cover (82) connected to said partition (6), and which encloses the operating member and is provided with a drinking opening (32) positioned downstream of the attachment ring (66) and said seal collar (68), whereby the operating member, the seal collar (68) and the cover (82) define a pressure balancing chamber (86) for the operating member; and
- wherein the pressure balancing chamber (86) is provided with at least one air vent (88) communicating with said ambient pressure (P1).

17. The hygiene-maintaining device according to claim 16, **characterized in that** both the attachment portion of the operating member and the cover (82) are releasably connected to the partition (6).

18. The hygiene-maintaining device according to claim 17, **characterized in that** the attachment portion of the operating member is releasably arranged between the partition (6) and an end of the cover (82) by means of a snap coupling (46) interconnecting the partition (6) and the cover (82).

19. The hygiene-maintaining device according to one of claims 3, 4, 14 and 16, **characterized in that** at least one activation opening (52) is provided with an airflow control device for controlling the course of venting in and out of the activation opening (52).

20. The hygiene-maintaining device according to claim 19, **characterized in that** the airflow control device (56) comprises at least two flexible flaps (58) that are attached around the activation opening (52), and which project obliquely out from the suction chamber (50), the free ends of the flaps (58) being placed in proximity of each other whilst in position of rest.

21. A method of mould casting, in one mould piece (92), an operating member, a bracing element and an elastic seal member for a discharge valve (2);
- in which the bracing element is a discharge tube (24) projecting, with the free end thereof, axially out from the operating member and having a tapered perimeter shape in the direction of its free end;
- in which the discharge tube (24), at the free end thereof, is formed into a dome-shaped, elastic and outwardly projecting valve head (22), which constitutes said seal member, and which is provided externally with a ring-shaped and elastic valve head seal lip (28) projecting radially out therefrom;
- wherein the method makes use of a segmented casting mould (90) comprising a lower casting segment (90a), an intermediate casting segment (90b) and an upper casting segment (90c);
- in which the lower casting segment (90a) is provided with a dome-shaped depression (94), the shape of which corresponds to the outside of the dome-shaped valve head (22) and a lower portion of the valve head seal lip (28);
- in which the intermediate casting segment (90b) has a shape corresponding to the inside of the operating member, to the outside of the discharge tube (24) and to an upper portion of valve head seal lip (28), the upper portion being shaped as a seat (100) in the intermediate casting segment (90b), whereby the lower and intermediate casting segment (90a) and (90b) are releasably assembled around the valve head seal lip (28);
- in which the upper casting segment (90c) has a shape corresponding to the outside of the operating member and to the inside of the discharge tube (24); and
- wherein the method comprises the steps of:
- removing the upper casting segment (90c) from the intermediate casting segment (90b) after having completed the casting of the mould piece (92) in its mould cavity in the casting mould (90);
- liberating the upper casting segment (90c) from the operating member and the inside of the discharge tube (24);
- pulling the lower casting segment (90a) away from the intermediate casting segment (90b), whereby the dome-shaped valve head (22) projects out from the intermediate casting segment (90b) at the same time as the radially and outwardly projecting valve head seal lip (28) is placed in locking manner against said seat (100) in the intermediate casting segment (90b), **characterized in that** the method also comprises:
- pushing a push rod (98) in the hole (96) of the intermediate casting segment (90b) up towards said elastic and dome-shaped valve head (22) and deflecting it elastically inwards into the discharge tube (24), whereby the valve head seal lip (28) is deflected away from its seat (100) in the casting segment (90b) and inwards into the discharge tube (24); and
- liberating and extracting the discharge tube (24) and its valve head seal lip (28) from the intermediate casting segment (90b), after which the elastic valve head (22) is moved back due to its inherent elasticity, or by pushing it back.

22. The method according to claim 21, **characterized in that** the mould piece (92) is moulded from a plastics material.

## Patentansprüche

1. Eine hygieneerhaltende Vorrichtung eines unterdruckaktivierten Ventils (2) für ein Trinkgefäss;
- in der das Ventil (2), solange es sich in der Gebrauchslage befindet, eine flussabwärts liegende Seite einer Auslaßöffnung (12) in einem an das Trinkgefäss angeschlossenen Teilbereich (6) druckfest umschliesst, der Teilbereich (6) entweder ein Wandabschnitt des Trinkgefässes oder ein Wandabschnitt einer Kappe (4) für das Gefäss ist;
- in der das Ventil (2) ein bewegliches Betätigungsteil, ein Verspannungselemenz (24) und ein Dichtungsteil (22) umfasst, welches, solange es sich in der Ruhelage befinden, besagte Öffnung des Teilbereiches abdichtet (12), wobei das Dichtungsteil (22) ein kuppelförmiger und elastischer Ventilkopf ist;
- in der das Betätigungsseil an eine Saugkammer (50) verbunden ist, in per ein Unterdruck (P2) errichtet werden kann, um das Betätigungsteil zu aktivieren und in eine offene Ventilposition zu bewegen, um damit der Flüssigkeit zu erlauben, durch die Öffnung des Teilbereiches (12) auszufliessen und weiter durch einen Flüssigkeitsauslasspfad im Ventil (2) hirdurch, wcbei das Betätigungsteil gegen den Umgebungsdruck (P1) des Trinkgefässes druckentlastet ist; und
- in der die Saugkammer (50) mit mindestens einer Aktivierungsöffnung (52) verbunden ist, durch die der Unterdruck (P2) in der Kammer (50) errichtet werden kann, wobei die Saugkammer (50) vom besagten Flüssigkeitsauslasspfad durch das Ventil (2) getrennt ist, welches das Endringen von Flüssigkeitsresten in die Saugkammer (50) vollständig oder teilweise verhindert, durch die sich anschliessende unhygienische Umstände darin bilden könnten, wobei der Teilbereich (6) mit einer Schranke versehen ist, die sowohl die flussabwärts liegende Seite der Öffnung des Teilbereiches (12) und das Verspannungselements (24) umschliesst, wobei die Saugkammer (50) vom besagten Flüssigkeitsauslasspfad getrennt ist, **dadurch gekennzeichnet, dass**:
- die Schranke eine Hülse (16), welche mit dem Teilbereich (6) verbunden ist, und welche frei aus demselben herausragt, ist;
- wobei besagtes Verspannungselement (24) ein Abführrohr (24) ist, wobei die Hülse (16) das Abführrohr (24) umschliesst und eine ringförmig Lücke (26) dazwischen definiert;
- wobei besagtes flussabwärts liegende Ende des Abführrohres (24) mit einer, mit dem Manövrierbereich des beweglichen Bewegungszeils verbundenen Trinköffnung (32) versehen ist;
- wobei ein peripherer Befestigungsbereich des Betätigungsteils mit dem Teilbereich (6) verbunden ist, wobei der Teilbereich (6), das Betätigungsteil, ein Bereich des Abführrohres (24) und die Hülse (16) besagte Saugkammer (50) definieren;
- wobei ein flussaufwärts liegendes Ende des Abführrohrs (24) mit besagtem Dichtungsteil (22) versehen ist, welches in seiner Ruhelage druckdicht gegen ein Ventilsitz an der flussaufwärts Liegenden Seite der Öffnung des Teilbereiches (12) aufsitzt;
- wobei das Abführrohr (24), unmittelbar flussabwärts des Dichtungsteils (22), mit mindestens einer Rohrwandöffnung (30) versehen ist, durch welche Flüssigkeit in und durch das Rohr (24) eintreten kann; und
- wobei besagte Lücke (26), unmittelbar flussabwärts der mindestens einen Rohrwandöffnung (30), mit einer flüssigkeitsflussbeschränkenden Vorrichtung verbunden ist, die angeordnet ist sodass der Fluss von Flüssigkeit über die Lücke (26) und in die Saugkammer (5C) vollständig oder teilweise unterbunden wird.

2. Die hygieneerhaltende Vorrichtung gemäss Anspruch 1, **dadurch gekennzeichnet, dass** das Abführrohr (24) flussabwärts der mindestens einen Rohrwandöffnung (30) diametral expandiert ist, wobei die Umfangsform des Abführrohres (24) graduell in Richtung flussaufwärts reduziert wird.

3. Die hygieneerhaltende Vorrichtung gemäss Anspruch 1 oder 2 **dadurch gekennzeichnet, dass** besagte flüssigkeitsflussbeschränkenden Vorrichtung eine ringförmige flüssigkeitsabdichtende Lippe (36) ist, die an der Aussenseite des Abführrohres (24) bereitgestellt ist, und welche beweglich und abdichtend gegen die Innenseite der Hülse (16) platziert ist; und
- wobei das Betätigungsteil mit mindestens einer, in die Saugkammer (50) führende Aktivierungsöffnung (52) versehen ist.

4. Die hygieneerhaltende Vorrichtung gemäss Anspruch 3, **dadurch gekennzeichnet, dass** mindestens eine Aktivierungsöffnung (52) in der Nähe besagter Trinköffnung (32) bereitgestellt ist, wobei der Ausfluss von Flüssigkeit und die Aktivierung mittels Unterdruck der Saugkammer (50) gleichzeitig stattfinden können.

5. Die hygieneerhaltende Vorrichtung gemäss Anspruch 1 oder 2, **dadurch gekennzeichnet, dass** besagte flüssigkeitsflussbeschränkenden Vorrichtung ein verengter Teilbereich (34) der besagten Lücke (26) zwischen den Abführrohr (24) und der Hülse (16) ist; und
- wobei die mindestens eine Aktivierungsöffnung (52) der Saugkammer (50) demnach die Lücke (26) zwischen der Hülse (16) und dem Rohr (24) umfasst, und auch das Abführrohr (24) mit seiner mindestens einen Rohrwandöffnung (30) und seiner Trinköffnung (32) umfasst.

6. Die hygieneerhaltende Vorrichtung gemäss einem der Ansprüche 1 bis 5, **dadurch gekennzeichnet dass** der Manövrierbereich des Betätigungsteils eine Trinkmündung (38) die mit der Trinköffnung (32) des Abführrohres (24) verbunden ist beinhaltet.

7. Die hygieneerhaltende Vorrichtung gemäss Anspruch 6, **dadurch gekennzeichnet, dass** der Manövrierbereich auch einen auswärts gerichteten, sich vom Fusse der Trinkmündung (38) ausweitenden Flanschbereich (42) beeinhaltet, und welcher mit mindestens einer flexiblen Zone (44) versehen ist, die bei Bewegung des Betätigungsteils widerstandsfähig ist.

8. Die hygieneerhaltende Vorrichtung gemäss einem der Ansprüche 1 bis 7, **dadurch gekennzeichnet, dass** der periphere Befestigungsbereich des Betätigungsteils mit den Teilbereich (6) lösbar verbunden ist.

9. Die hygieneerhaltende Vorrichtung gemäss Anspruch 8, **dadurch gekennzeichnet dass** der Befestigungsbereich innerhalb eines kragenförmiger Gehäuses (48) lösbar befestigt ist, welches in einem Kreis auf der Aussenseite einer Endwand der Kappe (4) angeordnet ist, wobei die Endwand besagten Teilbereich (6) bildet.

10. Die hygieneerhaltende Vorrichtung gemäss Anspruch 8 oder 9, **dadurch gekennzeichnet, dass** die lösbare Verbindung ein Rastanschluss ist (46).

11. Die hygieneerhaltende Vorrichtung gemäss einem der Ansprüche 1 bis 7, **dadurch gekennzeichnet, dass** der periphere Befestigungsbereich des Betätigungsteils zu einem Mantel (8) einer Kappe (4) geformt ist, wobei das Betätigungsteil unbeweglich innerhalb der Kappe (4) integriert ist.

12. Eine hygieneerhaltende Vorrichtung eines unterdruckaktivierten Ventils (2) für ein Trinkgefäss ;
- in der das Ventil (2), solange es sich in der Gebrauchslage befindet, eine flussabwärts liegende Seite einer Auslassöffnung (12) in einem an das Trinkgefäss angeschlossenen Teilbereich (6) druckfest umschliesst, der Teilbereich (6) entweder ein Wandabschnitt des Trinkgefässes oder ein Wandabschnitt der Kappe (4) für das Gefäss ist;
- in der das Ventil (2) ein bewegliches Betätigungsteil, ein Verspannungselement (24) und ein Dichtungsteil (22) umfasst welches, solange es sich in der Ruhelage befindet, besagte Öffnung des Teilbereiches abdichtet (12);
- in der das Betätigungsteil an eine Saugkammer (50) verbunden ist, in der ein Unterdruck (P2) errichtet werden kann um das Betätigungsteil zu aktivieren und in eine offene Ventilposition zu bewegen, um damit der Flüssigkeit zu erlauben, durch die Öffnung des Teilbereiches (12) auszufliessen und weiter durch einen Flüssigkeitsauslasspfad im Ventil (2) hindurch, wobei das Betätigungsteil gegen den Umgebungsdruck (P1) des Trinkgefässes druckentlastet ist; und
- in der die Saugkammer (50) mit mindestens einer Aktivierungsöffnung (52) verbunden ist, durch die der Unterdruck (P2) in der Kammer (50) errichtet werden kann, wobei die Saugkammer (50) vom besagten Flüssigkeitsauslasspfad durch das Ventil (2) getrennt ist, was das Endringen von Flüssigkeitsrester in die Saugkammer (50) vollständig oder teilweise verhindert sodass anschliessende unhygienische Umstände darin gebildet werden, wobei das Betätigungsteil mit einer Schranke versehen ist die sowohl die flussabwärts Liegende Seite der Öffnung des Teilbereiches (12) und das Verspannungselements (70) umschliesst, wobei die Saugkammer (50) vom besagten Flüssigkeitsauslasspfad getrennt ist, **dadurch gekennzeichnet, dass**:
- die Schranke eine Hülse (16) ist, welche mit einem Manövrierbereich des Betätigungsteils verbunden ist, und welche frei aus demselben herausragt und eine Länge der sich axial erstreckenden und rohrförmigen Teilbereichs (6c), wessen flussabwärts liegendes Ende die Teilbereichsöffnung (12) beinhaltet, umschliesst, wobei der Teilbereich (6c) und die Hülse (16) eine ringförmige Lücke (61) dazwischen definieren;
- wobei besagter Manövrierbereich ein Befestigungsring (66) und eine flexible, hülsenförnige, sich axial erstreckende und konisch geformte Membran (64) umfasst, wobei die axialen Endteilbereiche der Membran (64) einen Teilbereich mit einem ausgedehnten und einem engen Umfang umfassen;
- wobei ein innerer Umfang des Befestigungsringes (66) mit der hülse (16) verbunden ist, während ein äusserer Umfang dessen mit dem Teilbereich mit einem engen Umfang der Membran (64) verbunden ist;
- wobei der Teilbereich mit einem ausgedehnten Umfang des Befestigungsringes (66) mit dem peripheren Befestigungsbereich des Betätigungsteils verbunden ist, welcher mit dem Teilbereich (6) verbunden ist, und daher sowohl die Hülse (16) als auch den rohrförmigen Teilbereich (6c) umschliesst, wodurch der Teilbereich (6), das Betätigungsteil und die Hülse (16) die Saugkammer (50) definieren;
- wobei besagtes Verspannungselement ein kurzschliessbarer Ventilschaft (70) ist, welcher innerhalb der Hülse (16) befestigt ist und am flussaufwärts liegenden Ende dessen mit besagtem Dichtungsteil (22) versehen ist, und das Dichtungsteil (22) während seiner Ruhelage druckdicht gegen ein Ventilsitz (20) an der flussaufwärts Liegenden Seite der Öffnung des Teilbereiches (12) aufsitzt; und
- wobei die besagte Lücke (61) mit einer so angeordneten flüssigkeitsflussbeschränkenden Vorrichtung verbunden ist, welche den Fluss von Flüssigkeit über die Lücke (61) und in die Saugkammer (50) vollständig oder teilweise verhindert.

13. Die hygieneerhaltende Vorrichtung gemäss Anspruch 12, **dadurch gekennzeichnet, dass** besagter Ventilschaft (70) mittels mindestens einer Befestigungsrippe (70b) an der Hülse (16) befestigt ist, wobei Flüssigkeit entlang der mindestens einen Befestigungsrippe (7Cb) und aus dem Ventil (2) heraus fliessen kann.

14. Die hygieneerhaltende Vorrichtung gemäss Anspruch 12 oder 13, **dadurch gekennzeichnet, dass** besagte flüssigkeitsflussbeschränkende Vorrichtung eine ringförmige flüssigkeitsabdichtende Lippe (62) ist, welche an Innenseite der Hülse (16) bereitgestellt ist, und welche beweglich und abdichtend gegen die Aussenseite des rohrförmigen Teilbereiches (6c) platziert ist; und
- wobei der Befestigungsring (66) mit mindestens einer an der Aussenseite der Hülse (16) angeordneten und in die Saugkammer (50) führenden Aktivierungsöffnung (52) versehen ist, wodurch der Verzehr von Flüssigkeit und die Aktivierung durch Unterdruck gleichzeitig stattfinden können.

15. Die hygieneerhaltende Vorrichtung gemäss Anspruch 12 oder 13, **dadurch gekennzeichnet, dass** besagte flüssigkeitsflussbeschränkende Vorrichtung aus besagter, mit einer engen Ausnehmung welche den Flüssigkeitsfluss dcrthindurch beschränkt oder verhindert, aber genügend ausgedehnt ist um dorthindurch Luft zu strömen versehenen Lücke (61) besteht; und
- wobei die mindestens eine Aktivierungsöffnung (52) der Saugkammer (50) demnach die Innenseite der Hülse (16 und die Lücke (61) beinhaltet.

16. Die hygieneerhaltende Vorrichtung gemäss Anspruch 13 bis 15, **dadurch gekennzeichnet, dass** der Befestigungsringes (66) an dessen Aussenumfang und ausserhalb der mindestens einen Aktivierungsöffnung (52) mit einem, mit einer externen und flexiblen, beweglich und abdichtend gegen die Innenseite einer umgebenden, trinkmündungsförmigen und mit besagtem Teilbereich (6) verbundenen Abdeckung (82) platzierten Dichtungskragen (68), versehen ist, und welcher das Betätigungsteil umschliesst und mit einer flussabwärts des Befestigungsringes (66) und besagtem Dichtungskragens (68) liegenden Trinköffnung (32) versehen ist, wobei das Betätigungsteil, der Dichtungskragen (68) und die Abdeckung (82) eine Druckausgleichkamner (86) für das Betätigungsteil definieren; and
- wobei die Druckausgleichkammer (86) mit mindesten einer, mit dem Umgebungsdruck (P1) verbundenen Entlüftung (88) versehen ist.

17. Die hygieneerhaltende Vorrichtung gemäss Anspruch 16, **dadurch gekennzeichnet, dass** sowohl der Befestigungsbereich des Betätigungsteils als auch die Abdeckung (82) Lösbar mit den Teilbereich (6) verbunden ist.

18. Die hygieneerhaltende Vorrichtung gemäss Anspruch 17, **dadurch gekennzeichnet, dass** der Befestigungsbereich des Betätigungsteils, anhand eines den Teilbereich (6) und die Abdeckung miteinander verbindenden Rastanschlusses (46), lösbar zwischen dem Teilbereich (6) und einem Ende der Abdeckung (82) angeordnet ist.

19. Die hygieneerhaltende Vorrichtung gemäss Anspruch 3, 4, 14 und 16, **dadurch gekennzeichnet, dass** mindestens eine Aktivierungsöffnung (52) mit einer den Luftstrom kontrollierenden Vorrichtung für die Kontrolle des Verlaufs des Entlüftens in und aus der Aktivierungsöffnung (52) bereitgestellt ist.

20. Die hygieneerhaltende Vorrichtung gemäss Anspruch 19, **dadurch gekennzeichnet, dass** die den Luftstrom kontrollierende Vorrichtung (56) mindestens zwei flexible Klappen (58), welche um die Aktivierungsöffnung (52) befestigt sind, und welche aus der Saugkammer (50) schief herausragen, wobei die frei liegende Enden der Klappen (58) während der Ruhelage nah aneinander platziert sind.

21. Verfahren zum Formgiessen eines Betätigungsteils, eines Verspannungslements und eines elastischen Dichtungsteils in einem Formstück (92) für ein Abflussventil (2);
- in welchem das Verspannungsteil ein Abführrohr (24) ist, dessen freies Ende axial aus dem Betätigungsteil herausragt und welches in die Richtung dessen freien Endes eine kegelförmigen Umfangsform hat;
- in welchem das Abführrohr (24) an dessen freien Endes zu einem kuppelförmigen, elastischen und nach aussen herausragenden Ventilkopf (22) geformt ist, welcher besagtes Dichtungsteil bildet; und welcher extern mit einer hiervon radial herausragenden, ringförmigen und elastischen Ventilkopfabdichtungslippe (28) versehen ist;
- wobei das Verfahren eine segmentierte, ein unteres Giesssegment (90a), ein mittleres Giesssegment (9Gb) und ein höheres Giesssegment (90c) umfassende Giessform (90) verwendet;
- in der das untere Giesssegment (9Ca) mit einer kuppelförmigen Absenkung (94) versehen ist, deren Form der Aussenseite des kuppelförmigen Ventilkopfes (22) und dem unteren Bereich der Ventilkopfabdichtungslippe (28) entspricht;
- in der das mittlere Giesssegment (90b) eine Form hat, die der Innenseite des Betätigungsteils, der Aussenseite des Abführrohres (24) und dem oberen Bereich der Ventilkopfabdichtungslippe (28) entspricht, der obere Bereich im mittleren Giesssegment (90b) wie ein Sitz (100) geformt ist, wobei das untere und mittlere Giesssegment (9Ca) und (90b) lösbar um die Ventilkopfabdichtungslippe (28) angeordnet sind;
- in welchem das obere Giesssegment (90c) eine der Aussenseite des Betätigungsteils und der Innenseite des Abführrohres (24) entsprechende Form hat, und
- wobei das Verfahren die Schritte umfasst:
- Entfernen des oberen Giesssegmentes (90c) vom mittleren Giesssegment (90b) nachdem das Giessen des Formstückes (92) in dessen Formenhohlraum in der Giessform(90) vollendet ist;
- Befreien des oberen Giesssegmentes (90a) vom Betätigungsteil und von der Innenseite des Abführrohres (24);
- Wegziehen des unteren Giesssegmentes (90a) vom mittleren Giesssegment (90b), wobei der kuppelförmige Vertilkopf (22) zur selben Zeit wie die radial herausragende, ringförmige und elastische Ventilkopfabdichtungslippe (28) im mittleren Giesssegment (90b) in Sperrmanier gegen besagten Sitz (100) platziert wird, aus dem mittleren Giesssegment (90b) herausragt, **dadurch gekennzeichnet, dass** das Verfahren auch umfasst:
- Drücken einer Druckstange (98) in ein Loch (96) des mittlerer Giesssegmentes (90b) bis zu besagtem elastischen und kuppelförmigen Ventilkcpf (22) und innengewandtes, elastisches Ablenken dessen in das Abführrohr (24), wobei die Ventilkopfabdichtungslippe (28) im mittleren Giesssegment (90b) von ihrem Sitz (100) abgelenkt wird und innengewandt in das Abführrohr (24) abgelenkt wird, und;
- Befreien und Entnehmen des Abführrohres (24) und dessen Ventilkopfabdichtungslippe (28) vom mittleren Giesssegment (90b), nachdem der elastische Ventilkopf (22) aufgrund seiner inhärenten Elastizität, oder durch Zurückschieben, zurückbewegt wird.

22. Das Verfahren gemäss Anspruch 21, **dadurch gekennzeichnet, dass** das Formstück (92) aus einem Kunszstoffmaterial geformt ist.

## Revendications

1. Un dispositif maintenant l'hygiène d'une valve activée par dépression (2) pour un récipient pour boire ;
- dans lequel la valve (2), pendant une position d'utilisation, entoure de manière étanche à la pression un côté en aval d'une ouverture de sortie (12) dans une section (6) associée avec le récipient pour boire, la section (6) étant ou bien une portion de paroi du récipient pour boire ou une portion de paroi d'une opercule (4) pour le récipient ;
- dans lequel la valve (2) comprenant une pièce de fonctionnement mobile, un élément de serrage (24) une pièce de joint (22) qui, pendant une position de repos, bouche la dite ouverture de section (12), où la pièce de joint (22) est une tête de valve élastique et en forme de coupole;
- dans lequel la pièce de fonctionnement est connectée à une chambre d'aspiration (50) dans laquelle une dépression (P2) peut être établie de manière à activer et déplacer la pièce de fonctionnement vers une position d'ouverture de la valve, ce faisant permettant le liquide de s'écouler à travers la ouverture de section (12) et d'avantage en avant à travers un chemin d'écoulement de liquide dans la valve (2), la pièce de fonctionnement étant équilibrée en pression contre la pression ambiente (P1) du récipient pour boire ; et
- dans lequel la chambre d'aspiration (50) est connectée à au moins une ouverture d'activation (52) à travers laquelle la dépression (P2) dans la chambre (50) peut être établie, où la chambre d'aspiration (50) est séparée par le dit chemin d'écoulement de liquide à travers la valve (2), qui entièrement ou partiellement empêche les résidus de liquide d'entrer dans la chambre d'aspiration (50) de sort à créer des conditions insalubres subséquentes dans celle-ci, où la section (6) est munie d'un barrière entourant le côté en aval de l'ouverture de section (12) ainsi que l'élément de serrage (24), de sorte que la chambre d'aspiration (50) est séparée du dit chemin d'écoulement de liquide, **caractérisé en ce que** ;
- la barrière est une douille (16), qui est connectée à la section (6), est qui saillit librement hors de la même ;
- où le dite élément de serrage (24) est un tube à déchargement (24), de sorte que la douille (16) entoure le tube à déchargement (24) et définit un interstice annulaire (26), entre ceux-ci ;
- où le dit bout en aval du tube à décharge (24) est pourvu d'une ouverture pour boire (32) connecter à une portion de manoeuvre de la pièce de fonctionnement ;
- où une portion périphérique d'attachement de la pièce de fonctionnement est connecter à la section (6), de sorte que la section (6), la pièce de fonctionnement, une portion du tube à décharge (24) et de la douille (16) définissent la dite chambre à aspiration (50) ;
- où un bout en amont du tube à décharge (24) est pourvu de la dite pièce de joint (22), qui dans sa position de repos s'apppuie de manière étanche à la pression contre un siège de valve (20) du côté en amont de la section d'ouverture (12) ;
- où le tube à déchargement (24), immédiatement en amont de la pièce de joint (22) est pourvu avec au moins une ouverture de paroi de tube (30) à travers laquelle un liquide peut entrer dans et à travers le tube (24) ; et
- où le dite interstice (26), immédiatement en aval de la au moins une ouverture de paroi de tube (30) est connecté à un dispositif de restriction de flux de liquide disposé de manière à entièrement ou partiellement empêcher le flux de liquide à travers l'interstice (26) et dans la chambre d'aspiration (50).

2. Le dispositif maintenant l'hygiène selon la revendication 1, **caractérisé en ce que** le tube à déchargement (24) est agrandi diamétralement en aval de la au moins une ouverture de paroi du tube (30) de sorte que la forme du périmètre du tube à déchargement (24) est graduellement réduite dans la direction en amont.

3. Le dispositif maintenant l'hygiène selon la revendication 1 ou 2, **caractérisé en ce que** le dit dispositif de restriction de flux de liquide est une lèvre d'étanchéité (36) de liquides annulaire qui est disposée à l'extérieur du tube à déchargement (24) et qui est placée de manière mobile et étanche contre l'intérieur de la douille (16) ; et
- où la pièce de fonctionnement est pourvue d'au moins une ouverture d'activation (52) menant dans la chambre d'aspiration (50).

4. Le dispositif maintenant l'hygiène selon la revendication 3, **caractérisé en ce que** la au moins une ouverture d'activation (52) est prévue à proximité de la dite ouverture pour boire (32), de sorte que l'écoulement de liquide et l'activation par dépression de la chambre d'aspiration (50) puissent prendre place simultanément.

5. Le dispositif maintenant l'hygiène selon la revendication 1 ou 2, **caractérisé en ce que** le dit dispositif de restriction de flux de liquide est une portion rétrécie(34) du dit interstice (26) entre le tube à déchargement (24) et la douille (16) ; et
- où la au moins une ouverture d'activation (52) de la chambre d'aspiration (50) ainsi comprend l'interstice (26) entre la douille (16) et le tube (24), et aussi le tube à déchargement (24) avec son au moins une ouverture de paroi du tube (30) et son ouverture pour boire (32).

6. Le dispositif maintenant l'hygiène selon une des revendications 1 à 5 **caractérisé en ce que** la portion de manoeuvre de la pièce de fonctionnement inclut un bec pour boire pour boire (38) connecté à l'ouverture pour boire (32) du tube à déchargement (24).

7. Le dispositif maintenant l'hygiène selon la revendication 6, **caractérisé en ce que** la portion de manoeuvre inclut aussi une portion à brides (42) saillant hors depuis la base du bec pour boire (38) et qui est pourvue d'au moins une zone flexible (44) étant résistante lors de mouvement de la pièce de fonctionnement.

8. Le dispositif maintenant l'hygiène selon l'une des revendications 1 à 7, **caractérisé en ce que** la portion périphérique d'attachement de la pièce de fonctionnement est connectée de manière amovible à la section (6).

9. Le dispositif maintenant l'hygiène selon la revendication 8, **caractérisé en ce que** la portion d'attachement est attachée de manière amovible à l'intérieur d'un boîtier en forme de col (48) disposé en cercle su le côté extérieur d'un bout de paroi de l'opercule (4), le bout de paroi constituant la dite section (6).

10. Le dispositif maintenant l'hygiène selon la revendication 8 ou 9, **caractérisé en ce que** la connexion amovible est un couplage par encliquetage (46).

11. Le dispositif maintenant l'hygiène selon une des revendications 1 à 7, **caractérisé en ce que** la portion périphérique d'attachement de la pièce de fonctionnement est formée en manteau (8) d'un opercule (4), de sorte que la pièce de fonctionnement est intégrée de manière fixe à l'intérieur de l'opercule (4).

12. Un dispositif maintenant l'hygiène d'une valve activé par dépression (2) pour un récipient pour boire ;
- dans lequel la valve (2), pendant une position d'utilisation, entoure de manière étanche à la pression un côté en aval d'une ouverture de sortie (12) dans une section (6) associée avec le récipient pour boire, la section (6) étant ou bien un portion de paroi du récipient pour boire, ou une portion de paroi d'un opercule (4) pour le récipient ;
- dans lequel la valve (2) comprend une pièce de fonctionnement mobile, un élément de serrage (70) et une pièce de joint (22) qui, pendant la position de repos, bouche la dite ouverture de section (12) ;
- dans lequel la pièce de fonctionnement est connectée à une chambre d'aspiration (50) à l'intérieur de laquelle une dépression (p2) peut être établie de sorte à activer est déplacer la pièce de fonctionnement vers une position d'ouverture de valve, ainsi permettant au liquide de s'écouler à travers l'ouverture de section (12) et d'avantage en avant à travers un chemin d'écoulement de liquide dans la valve (2), la pièce de fonctionnement étant équilibrée en pression contre la pression ambiente (P1) du récipient pour boire ; et
- dans lequel la chambre d'aspiration (50) est connectée a au moins une ouverture d'activation (52) à travers laquelle la dépression (P2) peut être établie dans la chambre (50), où la chambre d'aspiration (50) est séparée par le dit chemin d'écoulement de liquide à travers la valve (2), qui entièrement ou partiellement empêche les résidus de liquide d'entrer dans la chambre d'aspiration (50) de sorte à créer des conditions insalubres subséquentes dans celle-ci, où la pièce de fonctionnement est pourvue d'une barrière entourant l'ouverture de l'ouverture de section (12), du côté en aval de celle-ci, et l'élément de serrage (70), de sorte que la chambre d'aspiration (50) est séparée par de chemin d'écoulement de liquide, **caractérisé en ce que** :
- la barrière est une douille (16) qui est connectée à une portion de manoeuvre de la pièce de fonctionnement, et qui saillit librement hors de celle-ci et qui entoure une longueur d'une portion de section s'étendant axialement et en forme de tube (6c), le bout en aval de celle-ci inclut l'ouverture de section (12), de sorte que la portion de section (6c) est la douille (16) définissent un interstice annulaire (61) ;
- où la dite portion de manoeuvre comprend un anneau d'attachement (66) et une membrane flexible, en forme de douille, s'étendant axialement et en forme conique, de sorte que les portions axiales en bout de la membrane (64) comprennent une portion de diamètre large et étroit ;
- où le périmètre intérieur de l'anneau d'attachement (66) est connecté à la douille (16), tandis que un périmètre extérieur de celui-ci est connecté à la portion de diamètre étroit de la membrane (64) ;
- où la portion de diamètre large de la membrane (64) est connecté à la portion d'attachement périphérique de la pièce de fonctionnement, qui est connectée à la section (6), et donc entoure la douille (16) et la portion de section en forme de tube (6c), de sorte que la section (6), la pièce de fonctionnement et la douille (16) définissent la dite chambre d'aspiration (50) ;
- où le dit élément de serrage est une tige de valve contournable (70) attachée à l'intérieur de la douille (16) et pourvu d'une dite pièce de joint (22) au bout en amont de celle-ci, la pièce de joint (22) s'appuyant de manière étanche à la pression contre le siège de valve (20) du côté en amont de l'ouverture de section (12) pendant une position de repos ; et
- où le dit interstice (61) est connecté à un dispositif de restriction de flux de liquide disposé de manière à entièrement ou partiellement empêcher le flux de liquide à travers l'interstice (61) et dans la dite chambre d'aspiration (50).

13. Le dispositif maintenant l'hygiène selon la revendication 12, **caractérisé en ce que** la dite tige de valve (70) est attachée à une douille (16) par le moyen d'au moins une nervure d'attachement (70b), de sorte que le liquide puisse circuler au-delà de la au moins une nervure d'attachement (70b) et hors de la valve (2).

14. Le dispositif maintenant l'hygiène selon la revendication 2 ou 13, **caractérisé en ce que** le dit dispositif de restriction de flux de liquide est une lèvre d'étanchéité de liquides annulaire disposée à l'intérieur de la douille (16) et qui est placée de manière mobile et étanche contre l'extérieur de la portion de section en forme de tube (6c) ; et
- où l'anneau d'attachement (66) est pourvu du moins une ouverture d'activation (52) arrangée à l'extérieur de la douille (16) est menant dans la chambre d'aspiration (50), le sorte que la consommation de liquide et l'activation par dépression de la chambre d'aspiration (50) puissent prendre place simultanément.

15. Le dispositif maintenant l'hygiène selon la revendication 12 ou 13, **caractérisé en ce que** le dit dispositif de restriction de flux de liquide consiste du dit interstice (61) pourvu d'un jeu étroit qui restreint ou empêche le flux de liquide à travers de celui-ci, mais qui est suffisamment grand pour permettre l'air de passer à travers de celui-ci; et
- où la au moins une ouverture d'activation (52) de la chambre d'aspiration (50) donc inclut l'intérieur de la douille (16) et l'interstice (61).

16. Le dispositif maintenant l'hygiène selon une des revendications 13 à 15, **caractérise en ce que** l'anneau d'attachement (66), au périmètre extérieur de celui-ci et à l'extérieur de la au moins une ouverture d'activation (52) est pourvu d'un col d'étanchéité (68) flexible et externe placé de manière mobile et étanche contre l'intérieur d'une couverture entourante, en forme de bec pour boire (82), connectée à la dite section (6), et qui entoure la pièce de fonctionnement et qui est pourvue avec une ouverture pour boire (32) positionnée en aval de l'anneau d'attachement (66) est du dit col d'étanchéité (68) de sorte que la pièce de fonctionnement, le col d'étanchéité (68) est la couvercle (82) définissent une chambre à équilibrage de pression (86) pour la pièce de fonctionnement ; et
- ou la chambre à équilibrage de pression (86) est pourvue d'au moins une ventilation d'aération (88) communicant avec la dite pression ambient (P1).

17. Le dispositif maintenant l'hygiène selon la revendication 16, **caractérisé en ce que** la portion d'attachement de la pièce de fonctionnement ainsi que la couverture (82) sont connectées de manière amovible à la section (6).

18. Le dispositif maintenant l'hygiène selon la revendication 17, **caractérisé en ce que** la portion d'attachement de la pièce de fonctionnement est arrangée de manière amovible entre la section (6) et le bout de la couverture (82) par moyen d'un couplage par encliquetage (46) interconnectant la section (6) et la couverture (82).

19. Le dispositif maintenant l'hygiène selon l'une de revendications 3, 4, 14 et 16, **caractérisé en ce que** au moins une ouverture d'activation (52) est pourvue d'un dispositif de contrôle de flux d'air pour contrôler le parcours de l'aération entrante et sortante de l'ouverture d'activation (52).

20. Le dispositif maintenant l'hygiène selon la revendication 19, **caractérisé en ce que** le dispositif de control de flux d'air (56) comprend au moins deux rabats flexibles (58) qui sont attachés autour de l'ouverture d'activation (52), et qui saillissent de manière oblique vers l'extérieur depuis la chambre d'aspiration (50), les bouts libres des rabats (58) étant placés à proximité de l'un à l'autre pendant la position de repos.

21. Un procédé de moulage, en une pièce moulée (92), une pièce de fonctionnement, un élément serrage et une pièce de joint élastique pour une valve à déchargement (2) ;
- dans laquelle l'élément de serrage est un tube à déchargement (24) saillant, avec le bout libre de de celui-ci, axialement hors depuis la pièce de fonctionnement et ayant une forme de périmètre effilée dans la direction de son bout libre ;
- dans lequel le tube à déchargement (24), au bout libre de celui-ci, est formé en tête de valve (22)en forme de coupole, élastique et saillant vers l'extérieur, qui constitue la dite pièce de joint, et qui est pourvu à l'extérieur avec une lèvre d'étanchéité de tête de valve (28) en forme annulaire et élastique saillant radialement vers l'extérieur depuis celle-ci ;
- où la méthode utilise un moule de coulée (90) segmenté comprenant un segment de coulée inférieur (90a), un segment de coulée intermédiaire (90b) et un segment de coulée supérieur (90c) ;
- dans lequel le segment de coulée inférieur (90a) est pourvu d'un creux en forme de coupole (94), la forme duquel correspond à l'extérieur de la tête de valve (22) en forme de coupole et à la portion inférieure de la lèvre d'étanchéité de tète de valve (28) ;
- dans lequel le segment de coulée intermédiaire (90b) à une forme correspondant à l'intérieur de la pièce de fonctionnement, à l'extérieur du tube à déchargement (24) et à une portion supérieure de la lèvre d'étanchéité de tête de valve (28), la portion supérieure étant formée en siège (100) dans le segment de coulée intermédiaire (90b), de sorte que les segments inférieur et intermédiaire (90a) et (90b) sont assemblés de manière amovible autour de la lèvre d'étanchéité de la tête de valve (28) ;
- dans lequel le segment de coulée supérieur (90c) à une forme correspondant à l'extérieur de la pièce de fonctionnement et à l'intérieur du tube à déchargement (24) ; et
- où la méthode comprend les étapes de:
- enlèvement du segment de coulée supérieur (90c) du segment de coulée intermédiaire (90b) après avoir complété la coulée de la pièce moulée (92) dans sa cavité de moule dans le moule (90) ;
- libération du segment supérieur (90c) de la pièce de fonctionnement et de l'intérieur du tube à déchargement (24);
- retirement du segment de coulée inférieur (90a) du segment de coulée intermédiaire (90b), de sorte que la tête de valve (22) en forme de coupole saillit à l'extérieur depuis le segment de coulée intermédiaire (90b) et en même temps que la lèvre d'étanchéité de tête de valve (28) saillissant radialement et vers l'extérieur est placée de manière verrouillant contre le dit siège (100) dans le segment de coulée intermédiaire (90b), **caractérisé en ce que** la méthode comprend aussi :
- pousser une tige poussoir (98) dans le trou (96) du segment intermédiaire (90b) jusqu'à la dite tête de valve (22) élastique et en forme de coupole et la devier élastiquement vers l'intérieur du tube à déchargement (24), de sorte que la lèvre d'étanchéité de la tête de valve (22) est déviée de son siège (100) dans le segment de coulée (90b) et vers l'intérieur du tube à déchargement (24) ; et
- libération et extraction du tube à déchargement (24) et de sa lèvre d'étanchéité de tête de valve (28) du segment intermédiaire (90b), après que la tête de valve élastique (22) retourne à cause de son élasticité, ou en la faisant reculer.

22. Le procédé selon la revendication 21, **caractérisé en ce que** la pièce moulée (92) est moulée à partir d'un matériau plastique.
